# EUROPEAN PATENT SPECIFICATION

(11) **EP 2 510 569 B1**
(45) Date of publication and mention of the grant of the patent: **22.07.2020**
(21) Application number: 10836775.6
(22) Date of filing: 10.12.2010
(51) Int. Cl.: H01M 4/583, H01G 11/24, H01G 11/34, H01G 11/46, H01M 4/62, H01M 10/06

(54) **CARBON MATERIALS COMPRISING AN ELECTROCHEMICAL MODIFIER**
KOHLENSTOFFMATERIALIEN MIT EINEM ELEKTROCHEMISCHEN MODIFIKATOR
MATÉRIAUX DE CARBONE COMPRENANT UN MODIFICATEUR ÉLECTROCHIMIQUE

(30) Priority: 11.12.2009 US 285777 P
(43) Date of publication of application: 17.10.2012
(73) Proprietor: BASF SE, 67056 Ludwigshafen am Rhein (DE)
(72) Inventor: FEAVER, Aaron, M., Seattle Washington 98177 (US); COSTANTINO, Henry, R., Woodinville Washington 98072 (US); MAROON, Matthew, J., Peoria Illinois 61604 (US); GERAMITA, Katharine, Washington 98103 (US); CHANG, Alan, Tzu-Yang, Renton Washington 98058 (US); SCOTT, William D., Seattle, Washington 98104 (US)
(74) Representative: BASF IP Association
(86) International application number: PCT/US2010/059947
(87) International publication number: WO 2011/072256

(56) References cited:
- EP-A1- 1 248 307
- WO-A1-98/55238
- WO-A1-2005/103490
- WO-A1-2011/003033
- WO-A1-2011/003033
- US-A1- 2002 168 314
- US-A1- 2004 132 845
- US-A1- 2007 113 735
- US-A1- 2008 180 881
- US-A1- 2009 104 509
- US-A1- 2009 104 509
- US-A1- 2009 104 530
- US-A1- 2009 114 544
- US-A1- 2009 114 544
- US-A1- 2009 145 482
- US-B2- 6 815 105
- US-B2- 7 245 478
- CZAKKEL O ET AL: "Influence of drying on the morphology of resorcinol-formaldehyde-based carbon gels", MICROPOROUS AND MESOPOROUS MATERIALS, ELSEVIER SCIENCE PUBLISHING, NEW YORK, US, vol. 86, no. 1-3, 28 November 2005 (2005-11-28), pages 124-133, XP027704985, ISSN: 1387-1811 [retrieved on 2005-11-28]

## Description

### CROSS-REFERENCE TO RELATED APPLICATION

The present application claims the benefit under 35 U.S.C. §119(e) of U.S. Provisional Patent Application No. 61/285,777 filed on December 11, 2009.

### BACKGROUND

### Technical Field

The present invention generally relates to carbon materials comprising an electrochemical modifier, methods for making the same and devices containing the same.

### Description of the Related Art

Hybrid energy storage devices, also known as asymmetric supercapacitors or hybrid battery/supercapacitors, utilize a combination of battery electrodes and supercapacitor electrodes. For example, hybrid lead-carbon energy storage devices employ lead-acid battery positive electrodes (cathodes) and ultracapacitor negative electrodes (anodes). Such devices comprise a unique set of characteristics including long cycle life, increased energy capacity, fast recharge capability and a wide range of temperature operability.

Conventional lead-acid energy storage devices may have limited active life and power performance. Hybrid energy storage devices employing either carbon or lead-acid electrodes (but not their combination at the same electrode) may provide some improvement and advantages over conventional lead-acid devices; however, their active life and power performance can likewise be limited. For example, lead-based positive electrodes often fail due to a loss of active lead dioxide paste from the current collector grid after multiple charge/discharge cycles. The anodes of these devices also deteriorate upon multiple charge/discharge cycles because the discharge lead sulfate crystal size increases and leads to 'densification' of the negative plate resulting in reduced charge acceptance and loss of capacity. This electrode failure is thought to be a result of secondary and tertiary side reactions caused by impurities in the carbon materials employed in these devices. In addition, the low surface area of the electrodes and relatively high ion migration distances limits the power performance of these devices.

Although the need for improved carbon materials comprising an electrochemical modifier (e.g., metals and/or metal compounds) and having both high surface area and high porosity has been recognized, such carbon material is not commercially available and no reported preparation method is capable of yielding the carbon material desired for high performance electrical devices. One method for preparing carbon materials comprising an electrochemical modifier is to contact a carbon material (*e.g*., activated carbon) with a source of the electrochemical modifier (e.g., a metal or metal salt). However, these methods are limited by the properties of available carbons, in particular, the intrinsic impurity of known carbon materials. Thus, these carbon materials have unsatisfactory electrical properties.

Another possible approach for producing carbon materials comprising an electrochemical modifier is to contact a source of the electrochemical modifier with a carbon or carbon precursor material (*e.g*., a polymer) prepared using a synthetic process. This method allows for incorporation of electrochemical modifiers at various steps in the carbon preparation process. However, known methods for preparing carbon materials from synthetic polymers result in unsuitable levels of impurities and electrodes prepared from these materials are unsuitable for use in electrical storage devices.

While significant advances have been made in the field, there continues to be a need in the art for improved carbon materials comprising an electrochemical modifier for use in electrical energy storage devices, as well as for methods of making the same and devices containing the same. The present invention fulfills these needs and provides further related advantages.

### BRIEF SUMMARY

In general terms, the current invention is directed to novel carbon materials comprising an electrochemical modifier. The novel carbon materials find utility in any number of electrical energy storage devices, for example as electrode energy storing active material in lead/acid batteries. The disclosed carbon materials are substantially devoid of all impurities except the electrochemical modifier. This high purity increases the active life and stability of electrodes prepared from the disclosed carbon materials relative to electrodes prepared from other carbon materials.

In addition to high purity, the disclosed carbon materials comprise a high surface area and, in certain embodiments, comprise microporous, mesoporous, or a mixed micro/mesoporous pore structure. Thus, electrodes comprising the carbon materials demonstrate increased contact of the electrode active material (*i.e*., a metal or metal compound) with the electrolyte of an electrical energy storage device. In addition, the carbon materials comprise high porosity and can accommodate both the electrochemical modifier and the electrolyte within its pore structure. This provides for close proximity of the active material to the electrolyte and a correspondingly short ion migration distance and, in some embodiments, also allows for a high loading of active material within the pores. This high surface area and high porosity both provide for better power performance of devices comprising the carbon materials relative to other known devices.

Accordingly, in one embodiment, a carbon material comprising an electrochemical modifier is disclosed. For example, in one embodiment the present disclosure provides a carbon material comprising at least 1,000 ppm of an electrochemical modifier, wherein the electrochemical modifier comprises lead or zinc or combinations thereof, and wherein the carbon material comprises a total of less than 500 ppm of all other elements having atomic numbers ranging from 11 to 92, as measured by proton induced x-ray emission. In other embodiments, the carbon material comprises a total of less than 200 ppm of all other elements having atomic numbers ranging from 11 to 92 as measured by proton induced x-ray emission.

In other embodiments, the electrochemical modifier is in elemental form or is in an oxidized form, for example, in the form of a metal oxide.

In other embodiments, the carbon material comprises at least 0.5% (wt/wt) of the electrochemical modifier. For example, in some embodiments the carbon material comprises at least 50% (wt/wt) of the electrochemical modifier, and in other embodiments the carbon material comprises at least 90% (wt/wt) of the electrochemical modifier.

In yet other embodiments, the electrochemical modifier comprises lead. In other embodiments, the lead is in the form of elemental lead, lead (II) oxide, lead (IV) oxide or combinations thereof. In other embodiments, the lead is in the form of lead acetate, lead carbonate, lead sulfate, lead orthoarsenate, lead pyroarsenate, lead bromide, lead caprate, lead carproate, lead caprylate, lead chlorate, lead chloride, lead fluoride, lead nitrate, lead oxychloride, lead orthophosphate sulfate, lead sulfide, lead tungstate or combinations thereof.

In certain embodiments, the ash content of the carbon material, excluding the ash associated with the electrochemical modifier, is less than 0.03% as calculated from proton induced x-ray emission data.

In some embodiments, the carbon material comprises less than 5 ppm iron as measured by proton induced x-ray emission. In other embodiments, the carbon material comprises less than 5 ppm nickel as measured by proton induced x-ray emission. In some other embodiments, the carbon material comprises less than 5 ppm cobalt as measured by proton induced x-ray emission. In yet other embodiments, the carbon material comprises less than 5 ppm titanium as measured by proton induced x-ray emission. In still other embodiments, the carbon material comprises less than 5 ppm chromium as measured by proton induced x-ray emission. In other embodiments, the carbon material comprises less than 5 ppm copper as measured by proton induced x-ray emission.

In some other embodiments of the present disclosure the carbon material comprises less than 100 ppm sodium, less than 300 ppm silicon, less than 100 ppm potassium, less than 100 ppm calcium, less than 20 ppm iron, less than 10 ppm nickel, less than 140 ppm copper, less than 50 ppm aluminum and less than 5 ppm chromium as measured by proton induced x-ray emission. For example, in a further embodiment, the carbon material comprises less than 50 ppm sodium, less than 50 ppm silicon, less than 30 ppm potassium, less than 10 ppm calcium, less than 2 ppm iron, less than 1 ppm nickel, less than 1 ppm copper, less than 10 ppm aluminum and less than 1 ppm chromium as measured by proton induced x-ray emission.

In other embodiments, the carbon material comprises a pyrolyzed polymer cryogel. In yet other embodiments, the carbon material comprises an activated polymer cryogel.

In still other embodiments, the carbon material comprises a BET specific surface area of at least 500 m²/g. For example, in other embodiments the carbon material comprises a BET specific surface area of at least 1000 m²/g. In further embodiments, the carbon material comprises a BET specific surface area of at least 1500 m²/g. In still further embodiments, the carbon material comprises a BET specific surface area of at least 2000 m²/g.

In certain embodiments, the carbon material comprises a total pore volume of at least 1.0 ml/g (cc/g), and in other embodiments, the carbon material comprises a total pore volume of at least 2.0 ml/g (cc/g).

In some embodiments, the carbon material comprises a pore volume of at least 0.25 ml/g (cc/g) for pores less than 20 angstroms.

In other embodiments, the carbon material comprises a pore volume of at least 0.75 ml/g (cc/g) for pores greater than 20 angstroms. For example, in some embodiments the carbon material comprises a pore volume of at least 1.50 ml/g (cc/g) for pores greater than 20 angstroms.

In yet other embodiments, the present disclosure provides an electrical energy storage device comprising a carbon material comprising at least 1,000 ppm of an electrochemical modifier, wherein the electrochemical modifier comprises lead or zinc or combinations thereof, and wherein the carbon material comprises a total of less than 500 ppm of all other elements having atomic numbers ranging from 11 to 92, as measured by proton induced x-ray emission.

In other embodiments of the foregoing device, the device is a battery comprising:
a) at least one positive electrode comprising a first active material in electrical contact with a first current collector;
b) at least one negative electrode comprising a second active material in electrical contact with a second current collector; and
c) an electrolyte;
wherein the positive electrode and the negative electrode are separated by an inert porous separator, and wherein at least one of the first or second active materials comprises the carbon material.

In other embodiments, both the first and second active materials comprise the carbon material. In some other embodiments, the first or second current collector comprises lead.

In still other embodiments, the electrolyte comprises sulfuric acid and water, and in other embodiments, the electrolyte comprises silica gel.

In other embodiments of the above device, the electrochemical modifier is lead. For example, in some embodiments, the lead is in the form of elemental lead, lead (II) oxide, lead (IV) oxide or combinations thereof. In other embodiments, the lead is in the form of lead acetate, lead carbonate, lead sulfate, lead orthoarsenate, lead pyroarsenate, lead bromide, lead caprate, lead carproate, lead caprylate, lead chlorate, lead chloride, lead fluoride, lead nitrate, lead oxychloride, lead orthophosphate sulfate, lead sulfide, lead tungstate or combinations thereof.

In another embodiment, the present disclosure provides an electrode comprising a binder and a carbon material comprising at least 1,000 ppm of an electrochemical modifier, wherein the electrochemical modifier comprises lead or zinc or combinations thereof, and wherein the carbon material comprises a total of less than 500 ppm of all other elements having atomic numbers ranging from 11 to 92, as measured by proton induced x-ray emission.

In certain embodiments of the electrode, the electrochemical modifier is lead. For example, in some embodiments the lead is in the form of elemental lead, lead (II) oxide, lead (IV) oxide or combinations thereof. In other embodiments the lead is in the form of lead acetate, lead carbonate, lead sulfate, lead orthoarsenate, lead pyroarsenate, lead bromide, lead caprate, lead carproate, lead caprylate, lead chlorate, lead chloride, lead fluoride, lead nitrate, lead oxychloride, lead orthophosphate sulfate, lead sulfide, lead tungstate or combinations thereof.

The present disclosure also provides a method for making a carbon material comprising an electrochemical modifier, the method comprising:
(a) reacting one or more polymer precursors to obtain a polymer gel;
(b) freeze drying the polymer gel to obtain a polymer cryogel;
(c) pyrolyzing the polymer cryogel to obtain a pyrolyzed polymer cryogel; and
(c) activating the pyrolyzed cryogel to obtain an activated carbon material,
the method further comprising the step of contacting the one or more polymer precursors, the polymer gel, the polymer cryogel, the pyrolyzed polymer cryogel or the activated carbon material with the electrochemical modifier, and wherein the electrochemical modifier comprises lead or zinc or combinations thereof.

In some embodiments, the electrochemical modifier comprises lead.

In other embodiments, the method further comprises reacting the one or more polymer precursors in a solvent comprising acetic acid and water.

In other embodiments, the volatile basic catalyst comprises ammonium carbonate, ammonium bicarbonate, ammonium acetate, ammonium hydroxide, or combinations thereof. In still other embodiments, the one or more polymer precursors comprise a phenolic compound and an aldehyde. For example, in some further embodiments, the phenolic compound comprises resorcinol and the aldehyde comprises formaldehyde.

### BRIEF DESCRIPTION OF THE DRAWINGS

In the figures, identical reference numbers identify similar elements. The sizes and relative positions of elements in the figures are not necessarily drawn to scale and some of these elements are arbitrarily enlarged and positioned to improve figure legibility. Further, the particular shapes of the elements as drawn are not intended to convey any information regarding the actual shape of the particular elements, and have been solely selected for ease of recognition in the figures.
Figure 1 depicts a representation of energy storage device.
Figure 2 shows a nitrogen sorption isotherm for microporous activated carbon.
Figure 3 presents a DFT pore volume distribution for microporous carbon.
Figure 4 depicts a DFT pore volume distribution for mesoporous activated carbon.
Figure 5 shows the DFT pore volume distribution for mesoporous carbon before (open circles) and after (solid diamonds) impregnation with lead acetate.
Figure 6 is a pore size distribution for a mesoporous carbon material.

### DETAILED DESCRIPTION

In the following description, certain specific details are set forth in order to provide a thorough understanding of various embodiments. However, one skilled in the art will understand that the invention may be practiced without these details. In other instances, well-known structures have not been shown or described in detail to avoid unnecessarily obscuring descriptions of the embodiments. Unless the context requires otherwise, throughout the specification and claims which follow, the word "comprise" and variations thereof, such as, "comprises" and "comprising" are to be construed in an open, inclusive sense, that is, as "including, but not limited to." Further, headings provided herein are for convenience only and do not interpret the scope or meaning of the claimed invention.

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments. Also, as used in this specification and the appended claims, the singular forms "a," "an," and "the" include plural referents unless the content clearly dictates otherwise. It should also be noted that the term "or" is generally employed in its sense including "and/or" unless the content clearly dictates otherwise.

### Definitions

As used herein, and unless the context dictates otherwise, the following terms have the meanings as specified below.

"Carbon material" refers to a material or substance comprised substantially of carbon. Carbon materials include ultrapure as well as amorphous and crystalline carbon materials. Examples of carbon materials include, but are not limited to, activated carbon, pyrolyzed dried polymer gels, pyrolyzed polymer cryogels, pyrolyzed polymer xerogels, pyrolyzed polymer aerogels, activated dried polymer gels, activated polymer cryogels, activated polymer xerogels, activated polymer aerogels and the like.

"Electrochemical modifier" refers to any chemical element, compound comprising a chemical element or any combination of different chemical elements and compounds which enhances the electrochemical performance of a carbon material. Electrochemical modifiers can change (increase or decrease) the resistance, capacity, power performance, stability and other properties of a carbon material. Electrochemical modifiers generally impart a desired electrochemical effect. In contrast, an impurity in a carbon material is generally undesired and tends to degrade, rather than enhance, the electrochemical performance of the carbon material. For example, electrochemical modifiers include, but are not limited to, lead or zinc or combinations thereof as well as oxides of the same and compounds comprising the same.

"Amorphous" refers to a material, for example an amorphous carbon material, whose constituent atoms, molecules, or ions are arranged randomly without a regular repeating pattern. Amorphous materials may have some localized crystallinity *(i.e.,* regularity) but lack long-range order of the positions of the atoms. Pyrolyzed and/or activated carbon materials are generally amorphous.

"Crystalline" refers to a material whose constituent atoms, molecules, or ions are arranged in an orderly repeating pattern. Examples of crystalline carbon materials include, but are not limited to, diamond and graphene.

"Synthetic" refers to a substance which has been prepared by chemical means rather than from a natural source. For example, a synthetic carbon material is one which is synthesized from precursor materials and is not isolated from natural sources.

"Impurity" or "impurity element" refers to an undesired foreign substance (*e.g*., a chemical element) within a material which differs from the chemical composition of the base material. For example, an impurity in a carbon material refers to any element or combination of elements, other than carbon, which is present in the carbon material. Impurity levels are typically expressed in parts per million (ppm).

"PIXE impurity" or "PIXE element" is any impurity element having an atomic number ranging from 11 to 92 (*i.e*., from sodium to uranium). The phrases "total PIXE impurity content" and "total PIXE impurity level" both refer to the sum of all PIXE impurities present in a sample, for example, a polymer gel or a carbon material. Electrochemical modifiers are not considered PIXE impurities as they are a desired constituent of the carbon materials. For example, in some embodiments an element may be added to a carbon material as an electrochemical modifier and will not be considered a PIXE impurity, while in other embodiments the same element may not be a desired electrochemical modifier and, if present in the carbon material, will be considered a PIXE impurity. PIXE impurity concentrations and identities may be determined by proton induced x-ray emission (PIXE).

"Ultrapure" refers to a substance having a total PIXE impurity content of less than 0.050%. For example, an "ultrapure carbon material" is a carbon material having a total PIXE impurity content of less than 0.050% (*i.e*., 500 ppm).

"Ash content" refers to the nonvolatile inorganic matter which remains after subjecting a substance to a high decomposition temperature. Herein, the ash content of a carbon material is calculated from the total PIXE impurity content as measured by proton induced x-ray emission, assuming that nonvolatile elements are completely converted to expected combustion products (*i.e*., oxides).

"Polymer" refers to a macromolecule comprised of two or more structural repeating units.

"Synthetic polymer precursor material" or "polymer precursor" refers to compounds used in the preparation of a synthetic polymer. Examples of polymer precursors that can be used in certain embodiments of the preparations disclosed herein include, but are not limited to, aldehydes (*i.e.*, HC(=O)R, where R is an organic group), such as for example, methanal (formaldehyde); ethanal (acetaldehyde); propanal (propionaldehyde); butanal (butyraldehyde); glucose; benzaldehyde and cinnamaldehyde. Other exemplary polymer precursors include, but are not limited to, phenolic compounds such as phenol and polyhydroxy benzenes, such as dihydroxy or trihydroxy benzenes, for example, resorcinol (*i.e*., 1,3-dihydroxy benzene), catechol, hydroquinone, and phloroglucinol. Mixtures of two or more polyhydroxy benzenes are also contemplated within the meaning of polymer precursor.

"Monolithic" refers to a solid, three-dimensional structure that is not particulate in nature.

"Sol" refers to a colloidal suspension of precursor particles (e.g., polymer precursors), and the term "gel" refers to a wet three-dimensional porous network obtained by condensation or reaction of the precursor particles.

"Polymer gel" refers to a gel in which the network component is a polymer; generally a polymer gel is a wet (aqueous or non-aqueous based) three-dimensional structure comprised of a polymer formed from synthetic precursors or polymer precursors.

"Sol gel" refers to a sub-class of polymer gel where the polymer is a colloidal suspension that forms a wet three-dimensional porous network obtained by reaction of the polymer precursors.

"Polymer hydrogel" or "hydrogel" refers to a subclass of polymer gel or gel wherein the solvent for the synthetic precursors or monomers is water or mixtures of water and one or more water-miscible solvent.

"RF polymer hydrogel" refers to a sub-class of polymer gel wherein the polymer was formed from the catalyzed reaction of resorcinol and formaldehyde in water or mixtures of water and one or more water-miscible solvent.

"Acid" refers to any substance that is capable of lowering the pH of a solution. Acids include Arrhenius, Bronsted and Lewis acids. A "solid acid" refers to a dried or granular compound that yields an acidic solution when dissolved in a solvent. The term "acidic" means having the properties of an acid.

"Base" refers to any substance that is capable of raising the pH of a solution. Bases include Arrhenius, Bronsted and Lewis bases. A "solid base" refers to a dried or granular compound that yields basic solution when dissolved in a solvent. The term "basic" means having the properties of a base.

"Mixed solvent system" refers to a solvent system comprised of two or more solvents, for example, two or more miscible solvents. Examples of binary solvent systems (*i.e*., containing two solvents) include, but are not limited to: water and acetic acid; water and formic acid; water and propionic acid; water and butyric acid and the like. Examples of ternary solvent systems (*i.e*., containing three solvents) include, but are not limited to: water, acetic acid, and ethanol; water, acetic acid and acetone; water, acetic acid, and formic acid; water, acetic acid, and propionic acid; and the like. The present invention contemplates all mixed solvent systems comprising two or more solvents.

"Miscible" refers to the property of a mixture wherein the mixture forms a single phase over certain ranges of temperature, pressure, and composition.

"Catalyst" is a substance which alters the rate of a chemical reaction. Catalysts participate in a reaction in a cyclic fashion such that the catalyst is cyclically regenerated. The present disclosure contemplates catalysts which are sodium free. The catalyst used in the preparation of a ultrapure polymer gel as described herein can be any compound that facilitates the polymerization of the polymer precursors to form an ultrapure polymer gel. A "volatile catalyst" is a catalyst which has a tendency to vaporize at or below atmospheric pressure. Exemplary volatile catalysts include, but are not limited to, ammoniums salts, such as ammonium bicarbonate, ammonium carbonate, ammonium hydroxide, and combinations thereof.

"Solvent" refers to a substance which dissolves or suspends reactants (*e.g*., ultrapure polymer precursors) and provides a medium in which a reaction may occur. Examples of solvents useful in the preparation of the gels, ultrapure polymer gels, ultrapure synthetic carbon materials and ultrapure synthetic amorphous carbon materials disclosed herein include, but are not limited to, water, alcohols and mixtures thereof. Exemplary alcohols include ethanol, t-butanol, methanol and mixtures thereof. Such solvents are useful for dissolution of the synthetic ultrapure polymer precursor materials, for example dissolution of a phenolic or aldehyde compound. In addition, in some processes such solvents are employed for solvent exchange in a polymer hydrogel (prior to freezing and drying), wherein the solvent from the polymerization of the precursors, for example, resorcinol and formaldehyde, is exchanged for a pure alcohol. In one embodiment of the present application, a cryogel is prepared by a process that does not include solvent exchange.

"Dried gel" or "dried polymer gel" refers to a gel or polymer gel, respectively, from which the solvent, generally water, or mixture of water and one or more water-miscible solvents, has been substantially removed.

"Pyrolyzed dried polymer gel" refers to a dried polymer gel which has been pyrolyzed but not yet activated, while an "activated dried polymer gel" refers to a dried polymer gel which has been activated.

"Cryogel" refers to a dried gel that has been dried by freeze drying.

"RF cryogel" refers to a dried gel that has been dried by freeze drying wherein the gel was formed from the catalyzed reaction of resorcinol and formaldehyde.

"Pyrolyzed cryogel" is a cryogel that has been pyrolyzed but not yet activated.

"Activated cryogel" is a cryogel which has been activated to obtain activated carbon material.

"Xerogel" refers to a dried gel that has been dried by air drying, for example, at or below atmospheric pressure.

"Pyrolyzed xerogel" is a xerogel that has been pyrolyzed but not yet activated.

"Activated xerogel" is a xerogel which has been activated to obtain activated carbon material.

"Aerogel" refers to a dried gel that has been dried by supercritical drying, for example, using supercritical carbon dioxide.

"Pyrolyzed aerogel" is an aerogel that has been pyrolyzed but not yet activated.

"Activated aerogel" is an aerogel which has been activated to obtain activated carbon material.

"Organic extraction solvent" refers to an organic solvent added to a polymer hydrogel after polymerization of the polymer precursors has begun, generally after polymerization of the polymer hydrogel is complete.

"Rapid multi-directional freezing" refers to the process of freezing a polymer gel by creating polymer gel particles from a monolithic polymer gel, and subjecting said polymer gel particles to a suitably cold medium. The cold medium can be, for example, liquid nitrogen, nitrogen gas, or solid carbon dioxide. During rapid multi-directional freezing nucleation of ice dominates over ice crystal growth. The suitably cold medium can be, for example, a gas, liquid, or solid with a temperature below about -10 °C. Alternatively, the suitably cold medium can be a gas, liquid, or solid with a temperature below about -20 °C. Alternatively, the suitably cold medium can be a gas, liquid, or solid with a temperature below about -30 °C

"Activate" and "activation" each refer to the process of heating a raw material or carbonized/pyrolyzed substance at an activation dwell temperature during exposure to oxidizing atmospheres (*e.g*., carbon dioxide, oxygen, steam or combinations thereof) to produce an "activated" substance (*e.g*., activated cryogel or activated carbon material). The activation process generally results in a stripping away of the surface of the particles, resulting in an increased surface area. Alternatively, activation can be accomplished by chemical means, for example, by impregnation of carbon-containing precursor materials with chemicals such as acids like phosphoric acid or bases like potassium hydroxide, sodium hydroxide or salts like zinc chloride, followed by carbonization. "Activated" refers to a material or substance, for example a carbon material, which has undergone the process of activation.

"Carbonizing", "pyrolyzing", "carbonization" and "pyrolysis" each refer to the process of heating a carbon-containing substance at a pyrolysis dwell temperature in an inert atmosphere (*e.g.*, argon, nitrogen or combinations thereof) or in a vacuum such that the targeted material collected at the end of the process is primarily carbon. "Pyrolyzed" refers to a material or substance, for example a carbon material, which has undergone the process of pyrolysis.

"Dwell temperature" refers to the temperature of the furnace during the portion of a process which is reserved for maintaining a relatively constant temperature (*i.e*., neither increasing nor decreasing the temperature). For example, the pyrolysis dwell temperature refers to the relatively constant temperature of the furnace during pyrolysis, and the activation dwell temperature refers to the relatively constant temperature of the furnace during activation.

"Pore" refers to an opening or depression in the surface, or a tunnel in a carbon material, such as for example activated carbon, pyrolyzed dried polymer gels, pyrolyzed polymer cryogels, pyrolyzed polymer xerogels, pyrolyzed polymer aerogels, activated dried polymer gels, activated polymer cryogels, activated polymer xerogels, activated polymer aerogels and the like. A pore can be a single tunnel or connected to other tunnels in a continuous network throughout the structure.

"Pore structure" refers to the layout of the surface of the internal pores within a carbon material, such as an activated carbon material. Components of the pore structure include pore size, pore volume, surface area, density, pore size distribution and pore length. Generally the pore structure of activated carbon material comprises micropores and mesopores.

"Mesopore" generally refers to pores having a diameter between 2 nanometers and 50 nanometers while the term "micropore" refers to pores having a diameter less than 2 nanometers. Mesoporous carbon materials comprise greater than 50% of their total pore volume in mesopores while microporous carbon materials comprise greater than 50% of their total pore volume in micropores.

"Surface area" refers to the total specific surface area of a substance measurable by the BET technique. Surface area is typically expressed in units of m²/g. The BET (Brunauer/Emmett/Teller) technique employs an inert gas, for example nitrogen, to measure the amount of gas adsorbed on a material and is commonly used in the art to determine the accessible surface area of materials.

"Connected" when used in reference to mesopores and micropores refers to the spatial orientation of such pores.

"Effective length" refers to the portion of the length of the pore that is of sufficient diameter such that it is available to accept salt ions from the electrolyte.

"Electrode" refers to a conductor through which electricity enters or leaves an object, substance or region.

"Binder" refers to a material capable of holding individual particles of a substance (*e.g*., a carbon material) together such that after mixing a binder and the particles together the resulting mixture can be formed into sheets, pellets, disks or other shapes. Non-exclusive examples of binders include fluoro polymers, such as, for example, PTFE (polytetrafluoroethylene, Teflon), PFA (perfluoroalkoxy polymer resin, also known as Teflon), FEP (fluorinated ethylene propylene, also known as Teflon), ETFE (polyethylenetetrafluoroethylene, sold as Tefzel and Fluon), PVF (polyvinyl fluoride, sold as Tedlar), ECTFE (polyethylenechlorotrifluoroethylene, sold as Halar), PVDF (polyvinylidene fluoride, sold as Kynar), PCTFE (polychlorotrifluoroethylene, sold as Kel-F and CTFE), trifluoroethanol and combinations thereof.

"Inert" refers to a material that is not active in the electrolyte of an electrical energy storage device, that is it does not absorb a significant amount of ions or change chemically, *e.g*., degrade.

"Conductive" refers to the ability of a material to conduct electrons through transmission of loosely held valence electrons.

"Current collector" refers to a part of an electrical energy storage and/or distribution device which provides an electrical connection to facilitate the flow of electricity in to, or out of, the device. Current collectors often comprise metal and/or other conductive materials and may be used as a backing for electrodes to facilitate the flow of electricity to and from the electrode.

"Electrolyte" means a substance containing free ions such that the substance is electrically conductive. Electrolytes are commonly employed in electrical energy storage devices. Examples of electrolytes include, but are not limited to, solvents such as propylene carbonate, ethylene carbonate, butylene carbonate, dimethyl carbonate, methyl ethyl carbonate, diethyl carbonate, sulfolane, methylsulfolane, acetonitrile or mixtures thereof in combination with solutes such as tetralkylammonium salts such as TEA TFB (tetraethylammonium tetrafluoroborate), MTEATFB (methyltriethylammonium tetrafluoroborate), EMITFB (1-ethyl-3-methylimidazolium tetrafluoroborate), tetraethylammonium, triethylammonium based salts or mixtures thereof. In some embodiments, the electrolyte can be a water-based acid or water-based base electrolyte such as mild aqueous sulfuric acid or aqueous potassium hydroxide.

"Elemental form" refers to a chemical element having an oxidation state of zero (*e.g*., metallic lead).

"Oxidized form" form refers to a chemical element having an oxidation state greater than zero.

### A. Carbon Materials Comprising an Electrochemical Modifier

In one embodiment, a carbon material comprising an electrochemical modifier is provided. For example, in some embodiments, the carbon material comprises at least 1000 ppm of the electrochemical modifier. In some embodiments, the electrochemical modifier comprises lead or zinc or or combinations thereof. In other embodiments, the carbon material comprises a total of less than 500 ppm of all other elements (excluding the electrochemical modifier) having atomic numbers ranging from 11 to 92, as measured by proton induced x-ray emission.

As discussed above, electrodes comprising carbon materials comprising metals and/or metal compounds and having residual levels of various impurities (*e.g*., sodium, chlorine, nickel, iron, etc.) are known to have decreased cycle life, durability and performance. The carbon materials disclosed herein are significantly more pure than other known carbon materials and are thus expected to improve the operation of any number of electrical energy storage and/or distribution devices.

The high purity of the disclosed carbon materials can be attributed to the disclosed sol gel and impregnation processes. Applicants have discovered that when one or more polymer precursors, for example a phenolic compound and an aldehyde, are co-polymerized under acidic conditions in the presence of a volatile basic catalyst, an ultrapure polymer gel results. This is in contrast to other reported methods for the preparation of polymer gels which result in polymer gels comprising residual levels of undesired impurities. The ultrapure polymer gels can be pyrolyzed by heating in an inert atmosphere (*e.g*., nitrogen) to yield the disclosed carbon materials comprising a high surface area and high pore volume. These carbon materials can be further activated without the use of chemical activation techniques - which introduce impurities - to obtain ultrapure activated carbon materials.

Electrochemical modifiers can be incorporated into the carbon materials at various stages of the sol gel process. For example, metals and/or metal compounds can be incorporated during the polymerization stage, into the polymer gel or into the pyrolyzed or activated carbon materials. The unique porosity and high surface area of the carbon materials provides for optimum contact of the electrode active material with the electrolyte in, for example, a lead/acid battery. Electrodes prepared from the disclosed carbon materials comprise improved active life and power performance relative to electrodes prepared from known carbon materials.

The properties of the disclosed carbon materials, as well as methods for their preparation are discussed in more detail below.

### 1. Polymer Gels Comprising an Electrochemical Modifier

Polymer gels are intermediates in the preparation of the disclosed carbon materials. As such, the physical and chemical properties of the polymer gels contribute to the properties of the carbon materials. Accordingly, in some embodiments the polymer gel comprises an electrochemical modifier. For example, in some embodiments, the polymer gel comprises at least 0.10%, at least 0.25%, at least 0.50%, at least 1.0%, at least 5.0%, at least 10%, at least 25%, at least 50%, at least 75%, at least 90%, or at least 95% of the electrochemical modifier. The percent of electrochemical modifier is calculated on weight percent basis (wt%).

In some embodiments, the electrochemical modifier comprises lead, tin, antimony, bismuth, arsenic, tungsten, silver, zinc, cadmium, indium, sulfur, silicon, oxides thereof, compounds comprising the same or combinations thereof. For example, in some embodiments the electrochemical modifier comprises lead, for example, elemental lead, lead (II) oxide or lead (IV) oxide.

In other embodiments, the polymer gel comprises a total of less than 500 ppm of all other elements (*i.e.,* excluding the electrochemical modifier) having atomic numbers ranging from 11 to 92. For example, in some other embodiments the polymer gel comprises less than 200 ppm, less than 100 ppm, less than 50 ppm, less than 25 ppm, less than 10 ppm, less than 5 ppm or less than 1 ppm of all other elements having atomic numbers ranging from 11 to 92. In some embodiments, the electrochemical modifier content and impurity content of the polymer gels can be determined by proton induced x-ray emission (PIXE) analysis.

In some embodiments, the polymer gel is a dried polymer gel, for example, a polymer cryogel. In other embodiments, the dried polymer gel is a polymer xerogel or a polymer aerogel. In some embodiments, the polymer gels are prepared from phenolic compounds and aldehyde compounds, for example, in one embodiment, the polymer gels can be produced from resorcinol and formaldehyde. In other embodiments, the polymer gels are produced under acidic conditions, and in other embodiments the polymer gels are produced in the presence of the electrochemical modifier. In some embodiments, acidity can be provided by dissolution of a solid acid compound, by employing an acid as the reaction solvent or by employing a mixed solvent system where one of the solvents is an acid. Preparation of the polymer gels is described in more detail below.

The disclosed process comprises polymerization to form a polymer gel in the presence of a basic volatile catalyst. Accordingly, in some embodiments, the polymer gel comprises one or more salts, for example, in some embodiments the one or more salts are basic volatile salts. Examples of basic volatile salts include, but are not limited to, ammonium carbonate, ammonium bicarbonate, ammonium acetate, ammonium hydroxide, and combinations thereof. Accordingly, in some embodiments, the present disclosure provides a polymer gel comprising ammonium carbonate, ammonium bicarbonate, ammonium acetate, ammonium hydroxide, or combinations thereof. In further embodiments, the polymer gel comprises ammonium carbonate. In other further embodiments, the polymer gel comprises ammonium acetate.

The polymer gels may also comprise low ash content which may contribute to the low ash content of a carbon material prepared therefrom. Thus, in some embodiments, the ash content (excluding ash associated with the electrochemical modifier) of the ultrapure polymer gel ranges from 0.1% to 0.001%. In other embodiments, the ash content (excluding ash associated with the electrochemical modifier) of the polymer gel is less than 0.1%, less than 0.08%, less than 0.05%, less than 0.03%, less than 0.025%, less than 0.01%, less than 0.0075%, less than 0.005% or less than 0.001%.

In other embodiments, the polymer gel has a total PIXE impurity content of all other elements (*i.e*., except the electrochemical modifier) of less than 500 ppm and an ash content (excluding electrochemical modifier) of less than 0.08%. In a further embodiment, the polymer gel has a total PIXE impurity content of all other elements (*i.e*., except the electrochemical modifier) of less than 300 ppm and an ash content (excluding electrochemical modifier) of less than 0.05%. In another further embodiment, the polymer gel has a total PIXE impurity content of all other elements (*i.e*., except the electrochemical modifier) of less than 200 ppm and an ash content (excluding electrochemical modifier) of less than 0.02%. In another further embodiment, the polymer gel has a total PIXE impurity content of all other elements (*i.e.,* except the electrochemical modifier) of less than 200 ppm and an ash content (excluding electrochemical modifier) of less than 0.01%.

As noted above, polymer gels comprising impurities generally yield carbon materials which also comprise impurities. Accordingly, one aspect of the present disclosure is a polymer gel with low levels of residual undesired impurities. The amount of individual PIXE impurities present in the polymer gel can be determined by proton induced x-ray emission. In some embodiments, the level of sodium present in the polymer gel is less than 1000 ppm, less than 500 ppm, less than 100 ppm, less than 50 ppm, less than 10 ppm, or less than 1 ppm. In some embodiments, the level of magnesium present in the polymer gel is less than 1000 ppm, less than 100 ppm, less than 50 ppm, less than 10 ppm, or less than 1 ppm. In some embodiments, the level of aluminum present in the polymer gel is less than 1000 ppm, less than 100 ppm, less than 50 ppm, less than 10 ppm, or less than 1 ppm. In some embodiments, the level of silicon present in the polymer gel is less than 500 ppm, less than 300 ppm, less than 100 ppm, less than 50 ppm, less than 20 ppm, less than 10 ppm or less than 1 ppm. In some embodiments, the level of phosphorous present in the polymer gel is less than 1000 ppm, less than 100 ppm, less than 50 ppm, less than 10 ppm, or less than 1 ppm. In some embodiments, the level of sulfur present in the polymer gel is less than 1000 ppm, less than 100 ppm, less than 50 ppm, less than 30 ppm, less than 10 ppm, less than 5 ppm or less than 1 ppm. In some embodiments, the level of chlorine present in the polymer gel is less than 1000 ppm, less than 100 ppm, less than 50 ppm, less than 10 ppm, or less than 1 ppm. In some embodiments, the level of potassium present in the polymer gel is less than 1000 ppm, less than 100 ppm, less than 50 ppm, less than 10 ppm, or less than 1 ppm. In other embodiments, the level of calcium present in the polymer gel is less than 100 ppm, less than 50 ppm, less than 20 ppm, less than 10 ppm, less than 5 ppm or less than 1 ppm. In some embodiments, the level of chromium present in the polymer gel is less than 1000 ppm, less than 100 ppm, less than 50 ppm, less than 10 ppm, less than 5 ppm, less than 4 ppm, less than 3 ppm, less than 2 ppm or less than 1 ppm. In other embodiments, the level of iron present in the polymer gel is less than 50 ppm, less than 20 ppm, less than 10 ppm, less than 5 ppm, less than 4 ppm, less than 3 ppm, less than 2 ppm or less than 1 ppm. In other embodiments, the level of nickel present in the polymer gel is less than 20 ppm, less than 10 ppm, less than 5 ppm, less than 4 ppm, less than 3 ppm, less than 2 ppm or less than 1 ppm. In some other embodiments, the level of copper present in the polymer gel is less than 140 ppm, less than 100 ppm, less than 40 ppm, less than 20 ppm, less than 10 ppm, less than 5 ppm, less than 4 ppm, less than 3 ppm, less than 2 ppm or less than 1 ppm. In yet other embodiments, the level of zinc present in the polymer gel is less than 20 ppm, less than 10 ppm, less than 5 ppm, less than 2 ppm or less than 1 ppm. In yet other embodiments, the sum of all PIXE impurities (excluding electrochemical modifier) present in the polymer gel is less than 1000 ppm, less than 500 pm, less than 300 ppm, less than 200 ppm, less than 100 ppm, less than 50 ppm, less than 25 ppm, less than 10 ppm or less than 1 ppm. As noted above, in some embodiments other impurities such as hydrogen, oxygen and/or nitrogen may be present in levels ranging from less than 10% to less than 0.01%.

In some embodiments, the polymer gels comprise PIXE impurities near or below the detection limit of the proton induced x-ray emission analysis. For example, in some embodiments, the polymer gels comprise less than 50 ppm sodium, less than 15 ppm magnesium, less than 10 ppm aluminum, less than 8 ppm silicon, less than 4 ppm phosphorous, less than 3 ppm sulfur, less than 3 ppm chlorine, less than 2 ppm potassium, less than 3 ppm calcium, less than 2 ppm scandium, less than 1 ppm titanium, less than 1 ppm vanadium, less than 0.5 ppm chromium, less than 0.5 ppm manganese, less than 0.5 ppm iron, less than 0.25 ppm cobalt, less than 0.25 ppm nickel, less than 0.25 ppm copper, less than 0.5 ppm zinc, less than 0.5 ppm gallium, less than 0.5 ppm germanium, less than 0.5 ppm arsenic, less than 0.5 ppm selenium, less than 1 ppm bromine, less than 1 ppm rubidium, less than 1.5 ppm strontium, less than 2 ppm yttrium, less than 3 ppm zirconium, less than 2 ppm niobium, less than 4 ppm molybdenum, less than 4 ppm, technetium, less than 7 ppm rubidium, less than 6 ppm rhodium, less than 6 ppm palladium, less than 9 ppm silver, less than 6 ppm cadmium, less than 6 ppm indium, less than 5 ppm tin, less than 6 ppm antimony, less than 6 ppm tellurium, less than 5 ppm iodine, less than 4 ppm cesium, less than 4 ppm barium, less than 3 ppm lanthanum, less than 3 ppm cerium, less than 2 ppm praseodymium, less than 2 ppm, neodymium, less than 1.5 ppm promethium, less than 1 ppm samarium, less than 1 ppm europium, less than 1 ppm gadolinium, less than 1 ppm terbium, less than 1 ppm dysprosium, less than 1 ppm holmium, less than 1 ppm erbium, less than 1 ppm thulium, less than 1 ppm ytterbium, less than 1 ppm lutetium, less than 1 ppm hafnium, less than 1 ppm tantalum, less than 1 ppm tungsten, less than 1.5 ppm rhenium, less than 1 ppm osmium, less than 1 ppm iridium, less than 1 ppm platinum, less than 1 ppm silver, less than 1 ppm mercury, less than 1 ppm thallium, less than 1 ppm lead, less than 1.5 ppm bismuth, less than 2 ppm thorium, or less than 4 ppm uranium.

In some specific embodiments, the polymer gel comprises less than 100 ppm sodium, less than 300 ppm silicon, less than 50 ppm sulfur, less than 100 ppm calcium, less than 20 ppm iron, less than 10 ppm nickel, less than 40 ppm copper, less than 5 ppm chromium and less than 5 ppm zinc. In other specific embodiments, the polymer gel comprises less than 50 ppm sodium, less than 100 ppm silicon, less than 30 ppm sulfur, less than 50 ppm calcium, less than 10 ppm iron, less than 5 ppm nickel, less than 20 ppm copper, less than 2 ppm chromium and less than 2 ppm zinc.

In other specific embodiments, the polymer gel comprises less than 50 ppm sodium, less than 50 ppm silicon, less than 30 ppm sulfur, less than 10 ppm calcium, less than 2 ppm iron, less than 1 ppm nickel, less than 1 ppm copper, less than 1 ppm chromium and less than 1 ppm zinc.

In some other specific embodiments, the polymer gel comprises less than 100 ppm sodium, less than 50 ppm magnesium, less than 50 ppm aluminum, less than 10 ppm sulfur, less than 10 ppm chlorine, less than 10 ppm potassium, less than 1 ppm chromium and less than 1 ppm manganese.

The disclosed method yields a polymer gel comprising a high specific surface area. Without being bound by theory, it is believed that the surface area of the polymer gel contributes, at least in part, to the desirable surface area properties of the carbon materials. The surface area can be measured using the BET technique well-known to those of skill in the art. In one embodiment of any of the aspects disclosed herein the polymer gel comprises a BET specific surface area of at least 150 m²/g, at least 250 m²/g, at least 400 m²/g, at least 500 m²/g, at least 600 m²/g or at least 700 m²/g.

In one embodiment, the polymer gel comprises a BET specific surface area of 100 m²/g to 1000 m²/g. Alternatively, the polymer gel comprises a BET specific surface area of between 150 m²/g and 700 m²/g. Alternatively, the polymer gel comprises a BET specific surface area of between 400 m²/g and 700 m²/g.

In one embodiment, the polymer gel comprises a tap density of from 0.10 g/ml (g/cc) to 0.60 g/ml (g/cc). In one embodiment, the polymer gel comprises a tap density of from 0.15 g/ml (g/cc) to 0.25 g/ml (g/cc). In one embodiment of the present disclosure, the polymer gel comprises a BET specific surface area of at least 150 m²/g and a tap density of less than 0.60 g/ml (g/cc). Alternately, the polymer gel comprises a BET specific surface area of at least 250 m²/g and a tap density of less than 0.4 g/ml (g/cc). In another embodiment, the polymer gel comprises a BET specific surface area of at least 500 m²/g and a tap density of less than 0.30 g/ml (g/cc).

In another embodiment of any of the aspects or variations disclosed herein the polymer gel comprises a residual water content of less than 15%, less than 13%, less than 10%, less than 5% or less than 1%.

In one embodiment, the polymer gel comprises a fractional pore volume of pores at or below 100 nm that comprises at least 50% of the total pore volume, at least 75% of the total pore volume, at least 90% of the total pore volume or at least 99% of the total pore volume. In another embodiment, the polymer gel comprises a fractional pore volume of pores at or below 20 nm that comprises at least 50% of the total pore volume, at least 75% of the total pore volume, at least 90% of the total pore volume or at least 99% of the total pore volume.

In one embodiment, the polymer gel comprises a fractional pore surface area of pores at or below 100 nm that comprises at least 50% of the total pore surface area, at least 75% of the total pore surface area, at least 90% of the total pore surface area or at least 99% of the total pore surface area. In another embodiment, the polymer gel comprises a fractional pore surface area of pores at or below 20 nm that comprises at least 50% of the total pore surface area, at least 75% of the total pore surface area, at least 90% of the total pore surface or at least 99% of the total pore surface area.

As described in more detail below, methods for preparing the disclosed carbon materials may include pyrolysis of a polymer gel. In some embodiments, the pyrolyzed polymer gels have a surface area from about 100 to about 1200 m²/g. In other embodiments, the pyrolyzed polymer gels have a surface area from about 500 to about 800 m²/g. In other embodiments, the pyrolyzed polymer gels have a surface area from about 500 to about 600 m²/g.

In other embodiments, the pyrolyzed polymer gels have a tap density from about .1 to about 1.0 g/ml (g/cc). In other embodiments, the pyrolyzed polymer gels have a tap density from about 0.3 to about 0.6 g/ml (g/cc). In other embodiments, the pyrolyzed polymer gels have a tap density from about 0.35 to about 0.45 g/ml (g/cc).

The polymer gels can be prepared by the polymerization of one or more polymer precursors in an appropriate solvent system under catalytic conditions. The electrochemical modifier can be incorporated into the gel either during or after the polymerization process. Accordingly, in one embodiment the polymer gel is prepared by admixing one or more miscible solvents, one or more phenolic compounds, one or more aldehydes, one or more catalysts and an electrochemical modifier. For example in a further embodiment the polymer gel is prepared by admixing water, acetic acid, resorcinol, formaldehyde, ammonium acetate and lead acetate. Preparation of polymers gels, and carbon materials, from the same is discussed in more detail below.

### 2. Carbon Materials Comprising an Electrochemical Modifier

As noted above, the present disclosure is directed to a carbon material comprising an electrochemical modifier. While not wishing to be bound by theory, it is believed that the purity profile, surface area, porosity and other properties of the carbon materials are a function of its preparation method, and variation of the preparation parameters may yield carbon materials having different properties. Accordingly, in some embodiments, the carbon material is a pyrolyzed dried polymer gel, for example, a pyrolyzed polymer cryogel, a pyrolyzed polymer xerogel or a pyrolyzed polymer aerogel. In other embodiments, the carbon material is activated (*i.e*., a synthetic activated carbon material). For example, in further embodiments the carbon material is an activated dried polymer gel, an activated polymer cryogel, an activated polymer xerogel or an activated polymer aerogel.

In some embodiments, the carbon material comprises at least 1,000 ppm of an electrochemical modifier. Electrochemical modifiers useful within the context of the present disclosure include those metals having favorable electrical properties when incorporated in a carbon material. Accordingly, the electrochemical modifier comprises lead or zinc or combinations thereof. In other embodiments, the carbon material comprises a total of less than 500 ppm of all other elements (excluding the electrochemical modifier) having atomic numbers ranging from 11 to 92, for example, less than 200 ppm, less than 100 ppm, less than 50 ppm, less than 25 ppm, less than 10 ppm, less than 5 ppm or less than 1 ppm. In certain embodiments the electrochemical modifier content and/or the PIXE impurity content is measured by proton induced x-ray emission analysis.

The electrochemical modifier can be a source of metal elements. For example, in some embodiments the electrochemical modifier comprises a metal salt. In other embodiments, the electrochemical modifier comprises one or more metal elements in elemental form, for example elemental lead. In other embodiments, the electrochemical modifier comprises one or more metal elements in oxidized form, for example lead (II) oxide or lead (IV) oxide.

In other embodiments, the electrochemical modifier comprises lead. In other embodiments, the electrochemical modifier comprises zinc. In some embodiments of any of the foregoing embodiments, the electrochemical modifier is in the form of an oxide. In some other embodiments of any of the foregoing embodiments, the electrochemical modifier is in the form of a salt or compound.

The electrochemical properties of the carbon materials can be modified, at least in part, by the amount of the electrochemical modifier in the carbon material. Accordingly, in some embodiments, the carbon material comprises at least 0.10%, at least 0.25%, at least 0.50%, at least 1.0%, at least 5.0%, at least 10%, at least 25%, at least 50%, at least 75%, at least 90%, at least 95%, at least 99% or at least 99.5% of the electrochemical modifier. For example, in some embodiments, the carbon materials comprise between 0.5% and 99.5% activated carbon and between 0.5% and 99.5% electrochemical modifier. The percent of the electrochemical modifier is calculated on weight percent basis (wt%). In some other more specific embodiments, the electrochemical modifier comprises lead.

Lead can impart desirable electrochemical properties to the carbon materials. Thus, in some specific embodiments, the electrochemical modifier comprises lead. For example, in some embodiments, the lead is in the form of elemental lead, lead (II) oxide, lead (IV) oxide or combinations thereof. In other embodiments, the lead is in the form of lead acetate, lead carbonate, lead sulfate, lead orthoarsenate, lead pyroarsenate, lead bromide, lead caprate, lead carproate, lead caprylate, lead chlorate, lead chloride, lead fluoride, lead nitrate, lead oxychloride, lead orthophosphate sulfate, lead sulfide, lead tungstate or combinations thereof.

In one embodiment, the electrochemical modifier has a melting temperature (M.P.) in excess of the pyrolysis and/or activation temperature used for preparation of the carbon material Examples of lead salts useful in this context include, but are not limited to: lead orthoarsenate (M.P. = 1042 °C), lead pyroarsenate (M.P. = 802 °C), lead fluoride (M.P. = 855 °C), lead monooxide (M.P. = 888 °C), lead orthophosphate (M.P. = 1014 °C), lead sulfate (M.P. = 977 °C), lead sulfide (M.P. = 1114 °C) and lead tungstate (M.P. = 1123 °C). Salts of other metals (e.g., zinc, cadmium, mercury, tin, lead, antimony, bismuth, and tellurium) which have a melting point above the pyrolysis and activation temperature are also employed in other embodiments.

Certain metal elements such as iron, cobalt, nickel, chromium, copper, titanium, vanadium and rhenium may decrease the electrical performance of electrodes comprising the carbon materials. Accordingly, in some embodiments, the carbon materials comprise low levels of one or more of these elements. For example, in certain embodiments, the carbon materials comprise less than 100 ppm iron, less than 50 ppm iron, less than 25 ppm iron, less than 10 ppm iron, less than 5 ppm iron or less than 1 ppm iron. In other embodiments, the carbon materials comprise less than 100 ppm cobalt, less than 50 ppm cobalt, less than 25 ppm cobalt, less than 10 ppm cobalt, less than 5 ppm cobalt or less than 1 ppm cobalt. In other embodiments, the carbon materials comprise less than 100 ppm nickel, less than 50 ppm nickel, less than 25 ppm nickel, less than 10 ppm nickel, less than 5 ppm nickel or less than 1 ppm nickel. In other embodiments, the carbon materials comprise less than 100 ppm chromium, less than 50 ppm chromium, less than 25 ppm chromium, less than 10 ppm chromium, less than 5 ppm chromium or less than 1 ppm chromium. In other embodiments, the carbon materials comprise less than 100 ppm copper, less than 50 ppm copper, less than 25 ppm copper, less than 10 ppm copper, less than 5 ppm copper or less than 1 ppm copper. In other embodiments, the carbon materials comprise less than 100 ppm titanium, less than 50 ppm titanium, less than 25 ppm titanium, less than 10 ppm titanium, less than 5 ppm titanium or less than 1 ppm titanium. In other embodiments, the carbon materials comprise less than 100 ppm vanadium, less than 50 ppm vanadium, less than 25 ppm vanadium, less than 10 ppm vanadium, less than 5 ppm vanadium or less than 1 ppm vanadium. In other embodiments, the carbon materials comprise less than 100 ppm rhenium, less than 50 ppm rhenium, less than 25 ppm rhenium, less than 10 ppm rhenium, less than 5 ppm rhenium or less than 1 ppm rhenium.

The porosity of the carbon materials allows for efficient impregnation of the electrochemical modifier and increased contact of the electrochemical modifier with the electrolyte when the carbon materials are employed as electrode materials. Accordingly, in one embodiment the carbon material comprises a pore volume of at least 0.35 ml/g (cc/g), at least 0.30 ml/g (cc/g), at least 0.25 ml/g (cc/g), at least 0.20 ml/g (cc/g) or at least 0.15 ml/g (cc/g) for pores less than 20 angstroms. In other embodiments, the carbon material comprises a pore volume of at least 4.00 ml/g (cc/g), at least 3.75 ml/g (cc/g), at least 3.50 ml/g (cc/g), at least 3.25 ml/g (cc/g), at least 3.00 ml/g (cc/g), at least 2.75 ml/g (cc/g), at least 2.50 ml/g (cc/g), at least 2.25 ml/g (cc/g), at least 2.00 ml/g (cc/g), at least 1.90 ml/g (cc/g), 1.80 ml/g (cc/g), 1.70 ml/g (cc/g), 1.60 ml/g (cc/g), 1.50 ml/g (cc/g), 1.40 ml/g (cc/g), at least 1.30 ml/g (cc/g), at least 1.20 ml/g (cc/g), at least 1.10 ml/g (cc/g), at least 1.00 ml/g (cc/g), at least 0.85 ml/g (cc/g), at least 0.80 ml/g (cc/g), at least 0.75 ml/g (cc/g), at least 0.70 ml/g (cc/g) or at least 0.65 ml/g (cc/g) for pores greater than 20 angstroms.

In other embodiments, the carbon material comprises a pore volume of at least 4.00 ml/g (cc/g), at least 3.75 ml/g (cc/g), at least 3.50 ml/g (cc/g), at least 3.25 ml/g (cc/g), at least 3.00 ml/g (cc/g), at least 2.75 ml/g (cc/g), at least 2.50 ml/g (cc/g), at least 2.25 ml/g (cc/g), at least 2.00 ml/g (cc/g), at least 1.90 ml/g (cc/g), 1.80 ml/g (cc/g), 1.70 ml/g (cc/g), 1.60 ml/g (cc/g), 1.50 ml/g (cc/g), 1.40 ml/g (cc/g), at least 1.30 ml/g (cc/g), at least 1.20 ml/g (cc/g), at least 1.10 ml/g (cc/g), at least 1.00 ml/g (cc/g), at least 0.85 ml/g (cc/g), at least 0.80 ml/g (cc/g), at least 0.75 ml/g (cc/g), at least 0.70 ml/g (cc/g) or at least 0.65 ml/g (cc/g) for pores ranging from 20 angstroms to 500 angstroms.

In other embodiments, the carbon material comprises a pore volume of at least 4.00 ml/g (cc/g), at least 3.75 ml/g (cc/g), at least 3.50 ml/g (cc/g), at least 3.25 ml/g (cc/g), at least 3.00 ml/g (cc/g), at least 2.75 ml/g (cc/g), at least 2.50 ml/g (cc/g), at least 2.25 ml/g (cc/g), at least 2.00 ml/g (cc/g), at least 1.90 ml/g (cc/g), 1.80 ml/g (cc/g), 1.70 ml/g (cc/g), 1.60 ml/g (cc/g), 1.50 ml/g (cc/g), 1.40 ml/g (cc/g), at least 1.30 ml/g (cc/g), at least 1.20 ml/g (cc/g), at least 1.10 ml/g (cc/g), at least 1.00 ml/g (cc/g), at least 0.85 ml/g (cc/g), at least 0.80 ml/g (cc/g), at least 0.75 ml/g (cc/g), at least 0.70 ml/g (cc/g) or at least 0.65 ml/g (cc/g) for pores ranging from 20 angstroms to 1000 angstroms.

In other embodiments, the carbon material comprises a pore volume of at least 4.00 ml/g (cc/g), at least 3.75 ml/g (cc/g), at least 3.50 ml/g (cc/g), at least 3.25 ml/g (cc/g), at least 3.00 ml/g (cc/g), at least 2.75 ml/g (cc/g), at least 2.50 ml/g (cc/g), at least 2.25 ml/g (cc/g), at least 2.00 ml/g (cc/g), at least 1.90 ml/g (cc/g), 1.80 ml/g (cc/g), 1.70 ml/g (cc/g), 1.60 ml/g (cc/g), 1.50 ml/g (cc/g), 1.40 ml/g (cc/g), at least 1.30 ml/g (cc/g), at least 1.20 ml/g (cc/g), at least 1.10 ml/g (cc/g), at least 1.00 ml/g (cc/g), at least 0.85 ml/g (cc/g), at least 0.80 ml/g (cc/g), at least 0.75 ml/g (cc/g), at least 0.70 ml/g (cc/g) or at least 0.65 ml/g (cc/g) for pores ranging from 20 angstroms to 2000 angstroms.

In other embodiments, the carbon material comprises a pore volume of at least 4.00 ml/g (cc/g), at least 3.75 ml/g (cc/g), at least 3.50 ml/g (cc/g), at least 3.25 ml/g (cc/g), at least 3.00 ml/g (cc/g), at least 2.75 ml/g (cc/g), at least 2.50 ml/g (cc/g), at least 2.25 ml/g (cc/g), at least 2.00 ml/g (cc/g), at least 1.90 ml/g (cc/g), 1.80 ml/g (cc/g), 1.70 ml/g (cc/g), 1.60 ml/g (cc/g), 1.50 ml/g (cc/g), 1.40 ml/g (cc/g), at least 1.30 ml/g (cc/g), at least 1.20 ml/g (cc/g), at least 1.10 ml/g (cc/g), at least 1.00 ml/g (cc/g), at least 0.85 ml/g (cc/g), at least 0.80 ml/g (cc/g), at least 0.75 ml/g (cc/g), at least 0.70 ml/g (cc/g) or at least 0.65 ml/g (cc/g) for pores ranging from 20 angstroms to 5000 angstroms.

In other embodiments, the carbon material comprises a pore volume of at least 4.00 ml/g (cc/g), at least 3.75 ml/g (cc/g), at least 3.50 ml/g (cc/g), at least 3.25 ml/g (cc/g), at least 3.00 ml/g (cc/g), at least 2.75 ml/g (cc/g), at least 2.50 ml/g (cc/g), at least 2.25 ml/g (cc/g), at least 2.00 ml/g (cc/g), at least 1.90 ml/g (cc/g), 1.80 ml/g (cc/g), 1.70 ml/g (cc/g), 1.60 ml/g (cc/g), 1.50 ml/g (cc/g), 1.40 ml/g (cc/g), at least 1.30 ml/g (cc/g), at least 1.20 ml/g (cc/g), at least 1.10 ml/g (cc/g), at least 1.00 ml/g (cc/g), at least 0.85 ml/g (cc/g), at least 0.80 ml/g (cc/g), at least 0.75 ml/g (cc/g), at least 0.70 ml/g (cc/g) or at least 0.65 ml/g (cc/g) for pores ranging from 20 angstroms to 1 micron.

In other embodiments, the carbon material comprises a pore volume of at least 4.00 ml/g (cc/g), at least 3.75 ml/g (cc/g), at least 3.50 ml/g (cc/g), at least 3.25 ml/g (cc/g), at least 3.00 ml/g (cc/g), at least 2.75 ml/g (cc/g), at least 2.50 ml/g (cc/g), at least 2.25 ml/g (cc/g), at least 2.00 ml/g (cc/g), at least 1.90 ml/g (cc/g), 1.80 ml/g (cc/g), 1.70 ml/g (cc/g), 1.60 ml/g (cc/g), 1.50 ml/g (cc/g), 1.40 ml/g (cc/g), at least 1.30 ml/g (cc/g), at least 1.20 ml/g (cc/g), at least 1.10 ml/g (cc/g), at least 1.00 ml/g (cc/g), at least 0.85 ml/g (cc/g), at least 0.80 ml/g (cc/g), at least 0.75 ml/g (cc/g), at least 0.70 ml/g (cc/g) or at least 0.65 ml/g (cc/g) for pores ranging from 20 angstroms to 2 microns.

In other embodiments, the carbon material comprises a pore volume of at least 4.00 ml/g (cc/g), at least 3.75 ml/g (cc/g), at least 3.50 ml/g (cc/g), at least 3.25 ml/g (cc/g), at least 3.00 ml/g (cc/g), at least 2.75 ml/g (cc/g), at least 2.50 ml/g (cc/g), at least 2.25 ml/g (cc/g), at least 2.00 ml/g (cc/g), at least 1.90 ml/g (cc/g), 1.80 ml/g (cc/g), 1.70 ml/g (cc/g), 1.60 ml/g (cc/g), 1.50 ml/g (cc/g), 1.40 ml/g (cc/g), at least 1.30 ml/g (cc/g), at least 1.20 ml/g (cc/g), at least 1.10 ml/g (cc/g), at least 1.00 ml/g (cc/g), at least 0.85 ml/g (cc/g), at least 0.80 ml/g (cc/g), at least 0.75 ml/g (cc/g), at least 0.70 ml/g (cc/g) or at least 0.65 ml/g (cc/g) for pores ranging from 20 angstroms to 3 microns.

In other embodiments, the carbon material comprises a pore volume of at least 4.00 ml/g (cc/g), at least 3.75 ml/g (cc/g), at least 3.50 ml/g (cc/g), at least 3.25 ml/g (cc/g), at least 3.00 ml/g (cc/g), at least 2.75 ml/g (cc/g), at least 2.50 ml/g (cc/g), at least 2.25 ml/g (cc/g), at least 2.00 ml/g (cc/g), at least 1.90 ml/g (cc/g), 1.80 ml/g (cc/g), 1.70 ml/g (cc/g), 1.60 ml/g (cc/g), 1.50 ml/g (cc/g), 1.40 ml/g (cc/g), at least 1.30 ml/g (cc/g), at least 1.20 ml/g (cc/g), at least 1.10 ml/g (cc/g), at least 1.00 ml/g (cc/g), at least 0.85 ml/g (cc/g), at least 0.80 ml/g (cc/g), at least 0.75 ml/g (cc/g), at least 0.70 ml/g (cc/g) or at least 0.65 ml/g (cc/g) for pores ranging from 20 angstroms to 4 microns.

In other embodiments, the carbon material comprises a pore volume of at least 4.00 ml/g (cc/g), at least 3.75 ml/g (cc/g), at least 3.50 ml/g (cc/g), at least 3.25 ml/g (cc/g), at least 3.00 ml/g (cc/g), at least 2.75 ml/g (cc/g), at least 2.50 ml/g (cc/g), at least 2.25 ml/g (cc/g), at least 2.00 ml/g (cc/g), at least 1.90 ml/g (cc/g), 1.80 ml/g (cc/g), 1.70 ml/g (cc/g), 1.60 ml/g (cc/g), 1.50 ml/g (cc/g), 1.40 ml/g (cc/g), at least 1.30 ml/g (cc/g), at least 1.20 ml/g (cc/g), at least 1.10 ml/g (cc/g), at least 1.00 ml/g (cc/g), at least 0.85 ml/g (cc/g), at least 0.80 ml/g (cc/g), at least 0.75 ml/g (cc/g), at least 0.70 ml/g (cc/g) or at least 0.65 ml/g (cc/g) for pores ranging from 20 angstroms to 5 microns.

In yet other embodiments, the carbon materials comprise a total pore volume of at least 4.00 ml/g (cc/g), at least 3.75 ml/g (cc/g), at least 3.50 ml/g (cc/g), at least 3.25 ml/g (cc/g), at least 3.00 ml/g (cc/g), at least 2.75 ml/g (cc/g), at least 2.50 ml/g (cc/g), at least 2.25 ml/g (cc/g), at least 2.00 ml/g (cc/g), at least 1.90 ml/g (cc/g), 1.80 ml/g (cc/g), 1.70 ml/g (cc/g), 1.60 ml/g (cc/g), 1.50 ml/g (cc/g), 1.40 ml/g (cc/g), at least 1.30 ml/g (cc/g), at least 1.20 ml/g (cc/g), at least 1.10 ml/g (cc/g), at least 1.00 ml/g (cc/g), at least 0.85 ml/g (cc/g), at least 0.80 ml/g (cc/g), at least 0.75 ml/g (cc/g), at least 0.70 ml/g (cc/g) or at least 0.65 ml/g (cc/g).

In certain embodiments a mesoporous carbon material having very little microporosity (e.g., less than 30%, less than 20 %, less than 10 % or less than 5% microporosity) is provided. The pore volume and surface area of such carbon materials are advantageous for inclusion of electrochemical modifiers and electrolyte ions in certain embodiments. For example, the mesoporous carbon can be a polymer gel that has been pyrolyzed, but not activated. In some embodiments, the mesoporous carbon comprises a specific surface area of at least 400 m²/g, at least 500 m²/g, at least 600 m²/g, at least 675 m²/g or at least 750 m²/g. In other embodiments, the mesoporous carbon material comprises a total pore volume of at least 0.50 ml/g (cc/g), at least 0.60 ml/g (cc/g), at least 0.70 ml/g (cc/g), at least 0.80 ml/g (cc/g) or at least 0.90 ml/g (cc/g). In yet other embodiments, the mesoporous carbon material comprises a tap density of at least 0.30 g/ml (g/cc), at least 0.35 g/ml (g/cc), at least 0.40 g/ml (g/cc), at least 0.45 g/ml (g/cc), at least 0.50 g/ml (g/cc) or at least 0.55 g/ml (g/cc). One embodiment of a mesoporous carbon according to the present disclosure is presented in Example 14 herein.

The carbon material comprises low total PIXE impurities (excluding the electrochemical modifier). Thus, in some embodiments the total PIXE impurity content (excluding the electrochemical modifier) of all other PIXE elements in the carbon material (as measured by proton induced x-ray emission) is less than 1000 ppm. In other embodiments, the total PIXE impurity content (excluding the electrochemical modifier) of all other PIXE elements in the carbon material is less than 800 ppm, less than 500 ppm, less than 300 ppm, less than 200 ppm, less than 150 ppm, less than 100 ppm, less than 50 ppm, less than 25 ppm, less than 10 ppm, less than 5 ppm or less than 1 ppm. In further embodiments of the foregoing, the carbon material is a pyrolyzed dried polymer gel, a pyrolyzed polymer cryogel, a pyrolyzed polymer xerogel, a pyrolyzed polymer aerogel, an activated dried polymer gel, an activated polymer cryogel, an activated polymer xerogel or an activated polymer aerogel.

In addition to low content of undesired PIXE impurities, the disclosed carbon materials may comprise high total carbon content. In addition to carbon, the carbon material may also comprise oxygen, hydrogen, nitrogen and the electrochemical modifier. In some embodiments, the material comprises at least 75% carbon, 80% carbon, 85% carbon, at least 90% carbon, at least 95% carbon, at least 96% carbon, at least 97% carbon, at least 98% carbon or at least 99% carbon on a weight/weight basis. In some other embodiments, the carbon material comprises less than 10% oxygen, less than 5% oxygen, less than 3.0% oxygen, less than 2.5% oxygen, less than 1% oxygen or less than 0.5% oxygen on a weight/weight basis. In other embodiments, the carbon material comprises less than 10% hydrogen, less than 5% hydrogen, less than 2.5% hydrogen, less than 1% hydrogen, less than 0.5% hydrogen or less than 0.1% hydrogen on a weight/weight basis. In other embodiments, the carbon material comprises less than 5% nitrogen, less than 2.5% nitrogen, less than 1% nitrogen, less than 0.5% nitrogen, less than 0.25% nitrogen or less than 0.01% nitrogen on a weight/weight basis. The oxygen, hydrogen and nitrogen content of the disclosed carbon materials can be determined by combustion analysis. Techniques for determining elemental composition by combustion analysis are well known in the art.

The total ash content of a carbon material may, in some instances, have an effect on the electrochemical performance of a carbon material. Accordingly, in some embodiments, the ash content (excluding electrochemical modifier) of the carbon material ranges from 0.1% to 0.001% weight percent ash, for example in some specific embodiments the ash content (excluding electrochemical modifier) of the carbon material is less than 0.1%, less than 0.08%, less than 0.05%, less than 0.03%, than 0.025%, less than 0.01%, less than 0.0075%, less than 0.005% or less than 0.001%.

In other embodiments, the carbon material comprises a total PIXE impurity content of all other elements (*i.e.,* except the electrochemical modifier) of less than 500 ppm and an ash content (excluding electrochemical modifier) of less than 0.08%. In further embodiments, the carbon material comprises a total PIXE impurity content of all other elements (*i.e*., except the electrochemical modifier) of less than 300 ppm and an ash content (excluding electrochemical modifier) of less than 0.05%. In other further embodiments, the carbon material comprises a total PIXE impurity content of all other elements (*i.e*., except the electrochemical modifier) of less than 200 ppm and an ash content (excluding electrochemical modifier) of less than 0.05%. In other further embodiments, the carbon material comprises a total PIXE impurity content of all other elements (*i.e*., except the electrochemical modifier) of less than 200 ppm and an ash content (excluding electrochemical modifier) of less than 0.025%. In other further embodiments, the carbon material comprises a total PIXE impurity content of all other elements (*i.e*., except the electrochemical modifier) of less than 100 ppm and an ash content (excluding electrochemical modifier) of less than 0.02%. In other further embodiments, the carbon material comprises a total PIXE impurity content of all other elements (*i.e*., except the electrochemical modifier) of less than 50 ppm and an ash content (excluding electrochemical modifier) of less than 0.01%.

The amount of individual PIXE impurities present in the disclosed carbon materials can be determined by proton induced x-ray emission. Individual PIXE impurities may contribute in different ways to the overall electrochemical performance of the disclosed carbon materials. Thus, in some embodiments, the level of sodium present in the carbon material is less than 1000 ppm, less than 500 ppm, less than 100 ppm, less than 50 ppm, less than 10 ppm, or less than 1 ppm. In some embodiments, the level of magnesium present in the carbon material is less than 1000 ppm, less than 100 ppm, less than 50 ppm, less than 10 ppm, or less than 1 ppm. In some embodiments, the level of aluminum present in the carbon material is less than 1000 ppm, less than 100 ppm, less than 50 ppm, less than 10 ppm, or less than 1 ppm. In some embodiments, the level of silicon present in the carbon material is less than 500 ppm, less than 300 ppm, less than 100 ppm, less than 50 ppm, less than 20 ppm, less than 10 ppm or less than 1 ppm. In some embodiments, the level of phosphorous present in the carbon material is less than 1000 ppm, less than 100 ppm, less than 50 ppm, less than 10 ppm, or less than 1 ppm. In some embodiments, the level of sulfur present in the carbon material is less than 1000 ppm, less than 100 ppm, less than 50 ppm, less than 30 ppm, less than 10 ppm, less than 5 ppm or less than 1 ppm. In some embodiments, the level of chlorine present in the carbon material is less than 1000 ppm, less than 100 ppm, less than 50 ppm, less than 10 ppm, or less than 1 ppm. In some embodiments, the level of potassium present in the carbon material is less than 1000 ppm, less than 100 ppm, less than 50 ppm, less than 10 ppm, or less than 1 ppm. In other embodiments, the level of calcium present in the carbon material is less than 100 ppm, less than 50 ppm, less than 20 ppm, less than 10 ppm, less than 5 ppm or less than 1 ppm. In some embodiments, the level of chromium present in the carbon material is less than 1000 ppm, less than 100 ppm, less than 50 ppm, less than 10 ppm, less than 5 ppm, less than 4 ppm, less than 3 ppm, less than 2 ppm or less than 1 ppm. In other embodiments, the level of iron present in the carbon material is less than 50 ppm, less than 20 ppm, less than 10 ppm, less than 5 ppm, less than 4 ppm, less than 3 ppm, less than 2 ppm or less than 1 ppm. In other embodiments, the level of nickel present in the carbon material is less than 20 ppm, less than 10 ppm, less than 5 ppm, less than 4 ppm, less than 3 ppm, less than 2 ppm or less than 1 ppm. In some other embodiments, the level of copper present in the carbon material is less than 140 ppm, less than 100 ppm, less than 40 ppm, less than 20 ppm, less than 10 ppm, less than 5 ppm, less than 4 ppm, less than 3 ppm, less than 2 ppm or less than 1 ppm. In yet other embodiments, the level of zinc present in the carbon material is less than 20 ppm, less than 10 ppm, less than 5 ppm, less than 2 ppm or less than 1 ppm. In yet other embodiments, the sum of all other PIXE impurities (excluding the electrochemical modifier) present in the carbon material is less than 1000 ppm, less than 500 pm, less than 300 ppm, less than 200 ppm, less than 100 ppm, less than 50 ppm, less than 25 ppm, less than 10 ppm or less than 1 ppm. As noted above, in some embodiments other impurities such as hydrogen, oxygen and/or nitrogen may be present in levels ranging from less than 10% to less than 0.01%.

In some embodiments, the carbon material comprises undesired PIXE impurities near or below the detection limit of the proton induced x-ray emission analysis. For example, in some embodiments the carbon material comprises less than 50 ppm sodium, less than 15 ppm magnesium, less than 10 ppm aluminum, less than 8 ppm silicon, less than 4 ppm phosphorous, less than 3 ppm sulfur, less than 3 ppm chlorine, less than 2 ppm potassium, less than 3 ppm calcium, less than 2 ppm scandium, less than 1 ppm titanium, less than 1 ppm vanadium, less than 0.5 ppm chromium, less than 0.5 ppm manganese, less than 0.5 ppm iron, less than 0.25 ppm cobalt, less than 0.25 ppm nickel, less than 0.25 ppm copper, less than 0.5 ppm zinc, less than 0.5 ppm gallium, less than 0.5 ppm germanium, less than 0.5 ppm arsenic, less than 0.5 ppm selenium, less than 1 ppm bromine, less than 1 ppm rubidium, less than 1.5 ppm strontium, less than 2 ppm yttrium, less than 3 ppm zirconium, less than 2 ppm niobium, less than 4 ppm molybdenum, less than 4 ppm, technetium, less than 7 ppm rubidium, less than 6 ppm rhodium, less than 6 ppm palladium, less than 9 ppm silver, less than 6 ppm cadmium, less than 6 ppm indium, less than 5 ppm tin, less than 6 ppm antimony, less than 6 ppm tellurium, less than 5 ppm iodine, less than 4 ppm cesium, less than 4 ppm barium, less than 3 ppm lanthanum, less than 3 ppm cerium, less than 2 ppm praseodymium, less than 2 ppm, neodymium, less than 1.5 ppm promethium, less than 1 ppm samarium, less than 1 ppm europium, less than 1 ppm gadolinium, less than 1 ppm terbium, less than 1 ppm dysprosium, less than 1 ppm holmium, less than 1 ppm erbium, less than 1 ppm thulium, less than 1 ppm ytterbium, less than 1 ppm lutetium, less than 1 ppm hafnium, less than 1 ppm tantalum, less than 1 ppm tungsten, less than 1.5 ppm rhenium, less than 1 ppm osmium, less than 1 ppm iridium, less than 1 ppm platinum, less than 1 ppm silver, less than 1 ppm mercury, less than 1 ppm thallium, less than 1 ppm lead, less than 1.5 ppm bismuth, less than 2 ppm thorium, or less than 4 ppm uranium.

In some specific embodiments, the carbon material comprises less than 100 ppm sodium, less than 300 ppm silicon, less than 50 ppm sulfur, less than 100 ppm calcium, less than 20 ppm iron, less than 10 ppm nickel, less than 140 ppm copper, less than 5 ppm chromium and less than 5 ppm zinc as measured by proton induced x-ray emission. In other specific embodiments, the carbon material comprises less than 50 ppm sodium, less than 30 ppm sulfur, less than 100 ppm silicon, less than 50 ppm calcium, less than 10 ppm iron, less than 5 ppm nickel, less than 20 ppm copper, less than 2 ppm chromium and less than 2 ppm zinc.

In other specific embodiments, the carbon material comprises less than 50 ppm sodium, less than 50 ppm silicon, less than 30 ppm sulfur, less than 10 ppm calcium, less than 2 ppm iron, less than 1 ppm nickel, less than 1 ppm copper, less than 1 ppm chromium and less than 1 ppm zinc.

In some other specific embodiments, the carbon material comprises less than 100 ppm sodium, less than 50 ppm magnesium, less than 50 ppm aluminum, less than 10 ppm sulfur, less than 10 ppm chlorine, less than 10 ppm potassium, less than 1 ppm chromium and less than 1 ppm manganese.

The disclosed carbon materials also comprise a high surface area. While not wishing to be bound by theory, it is thought that such high surface area may contribute, at least in part, to their superior electrochemical performance. Accordingly, in some embodiments, the carbon material comprises a BET specific surface area of at least 100 m²/g, at least 300 m²/g, at least 500 m2/g, at least 1000 m²/g, at least 1500 m²/ g, at least 2000 m²/g, at least 2400 m²/g, at least 2500 m²/g, at least 2750 m²/g or at least 3000 m²/g. For example, in some embodiments of the foregoing, the carbon material is activated.

In another embodiment, the carbon material comprises a tap density between 0.1 and 1.0 g/ml (g/cc), between 0.2 and 0.8 g/ml (g/cc), between 0.3 and 0.5 g/ml (g/cc) or between 0.4 and 0.5 g/ml (g/cc). In another embodiment, the carbon material has a total pore volume of at least 0.1 cm³/g, at least 0.2 cm³/g, at least 0.3 cm³/g, at least 0.4 cm3/g, at least 0.5 cm³/g, at least 0.7 cm³/g, at least 0.75 cm³/g, at least 0.9 cm³/g, at least 1.0 cm³/g, at least 1.1 cm³/g, at least 1.2 cm³/g, at least 1.3 cm³/g, at least 1.4 cm³/g, at least 1.5 cm³/gor at least 1.6 cm³/g.

The pore size distribution of the disclosed carbon materials is one parameter that may have an effect on the electrochemical performance of the carbon materials. For example, carbon materials comprising mesopores with a short effective length (*i.e*., less than 10 nm, less than 5, nm or less than 3 nm as measured by TEM) may be useful to enhance ion transport and maximize power. Accordingly, in one embodiment, the carbon material comprises a fractional pore volume of pores at or below 100 nm that comprises at least 50% of the total pore volume, at least 75% of the total pore volume, at least 90% of the total pore volume or at least 99% of the total pore volume. In other embodiments, the carbon material comprises a fractional pore volume of pores at or below 20 nm that comprises at least 50% of the total pore volume, at least 75% of the total pore volume, at least 90% of the total pore volume or at least 99% of the total pore volume.

In another embodiment, the carbon material comprises a fractional pore surface area of pores at or below 100 nm that comprises at least 50% of the total pore surface area, at least 75% of the total pore surface area, at least 90% of the total pore surface area or at least 99% of the total pore surface area. In another embodiment, the carbon material comprises a fractional pore surface area of pores at or below 20 nm that comprises at least 50% of the total pore surface area, at least 75% of the total pore surface area, at least 90% of the total pore surface area or at least 99% of the total pore surface area.

In another embodiment, the carbon material comprises pores predominantly in the range of 1000 angstroms or lower, for example 100 angstroms or lower, for example 50 angstroms or lower. Alternatively, the carbon material comprises micropores in the range of 0-20 angstroms and mesopores in the range of 20-1000 angstroms. The ratio of pore volume or pore surface in the micropore range compared to the mesopore range can be in the range of 95:5 to 5:95.

In other embodiments, the carbon materials are mesoporous and comprise monodisperse mesopores. As used herein, the term "monodisperse" when used in reference to a pore size refers generally to a span (further defined as (Dv90 - Dv10)/Dv, 50 where Dv10, Dv50 and Dv90 refer to the pore size at 10%, 50% and 90% of the distribution by volume of about 3 or less, typically about 2 or less, often about 1.5 or less.

Yet in other embodiments, the carbons materials comprise a pore volume of at least 1 ml/g (cc/g), at least 2 ml/g (cc/g), at least 3 ml/g (cc/g), at least 4 ml/g (cc/g) or at least 7 ml/g (cc/g). In one particular embodiment, the carbon materials comprise a pore volume of from 1 ml/g (cc/g) to 7 ml/g (cc/g).

In other embodiments, the carbon materials comprise at least 50% of the total pore volume residing in pores with a diameter ranging from 50 Å to 5000 Å. In some instances, the carbon materials comprise at least 50% of the total pore volume residing in pores with a diameter ranging from 50 Å to 500 Å. Still in other instances, the carbon materials comprise at least 50% of the total pore volume residing in pores with a diameter ranging from 500 Å to 1000 Å. Yet in other instances, the carbon materials comprise at least 50% of the total pore volume residing in pores with a diameter ranging from 1000 Å to 5000 Å.

In some embodiments, the mean particle diameter for the carbon materials ranges from 1 to 1000 microns. In other embodiments the mean particle diameter for the carbon materials ranges from 1 to 100 microns. Still in other embodiments the mean particle diameter for the carbon materials ranges from 5 to 50 microns. Yet in other embodiments, the mean particle diameter for the carbon materials ranges from 5 to 15 microns or from 3 to 5 microns. Still in other embodiments, the mean particle diameter for the carbon materials is about 10 microns.

In some embodiments, the carbon materials comprise pores having a peak pore volume ranging from 2 nm to 10 nm. In other embodiments, the peak pore volume ranges from 10 nm to 20 nm. Yet in other embodiments, the peak pore volume ranges from 20 nm to 30 nm. Still in other embodiments, the peak pore volume ranges from 30 nm to 40 nm. Yet still in other embodiments, the peak pore volume ranges from 40 nm to 50 nm. In other embodiments, the peak pore volume ranges from 50 nm to 100 nm.

While not wishing to be bound by theory, a carbon material or polymer gel comprising small pore sizes (*i.e.*, pore lengths) may have the advantage of decreased diffusion distances to facilitate impregnation of the electrochemical modifier, for example lead or a lead salt. For example, it is believed that the employment of carbon materials with a substantial fraction of pores in the mesopore range (as discussed above) will provide a significant advantage compared to carbon materials which comprise much larger pore sizes, for example micron or millimeter size pores.

In another embodiment of the present disclosure, the carbon material is prepared by a method disclosed herein, for example, in some embodiments the carbon material is prepared by a method comprising pyrolyzing a dried polymer gel as disclosed herein. In some embodiments, the pyrolyzed polymer gel is further activated to obtain an activated carbon material. Carbon materials comprising an electrochemical modifier can be prepared by any number of methods described in more detail below.

### B. Preparation of Carbon Materials Comprising an Electrochemical Modifier

Methods for preparing carbon materials which comprise electrochemical modifiers and which comprise high surface area, high porosity and low levels of undesirable impurities are not known in the art. Current methods for preparing carbon materials of high surface area and high porosity result in carbon materials having high levels of undesirable impurities. Electrodes prepared by incorporating an electrochemical modifier into these carbon materials have poor electrical performance as a result of the residual impurities. Accordingly, in one embodiment the present disclosure provides a method for preparing carbon materials comprising an electrochemical modifier, wherein the carbon materials comprise a high surface area, high porosity and low levels of undesirable impurities. In some embodiments, the methods comprise preparation of a polymer gel by a sol gel process followed by pyrolysis of the dried polymer gel and optional activation of the pyrolyzed polymer gel. The sol gel process provides significant flexibility such that an electrochemical modifier can be incorporated at any number of steps. In other embodiments, carbon materials from other sources (e.g., carbon nanotubes, carbon fibers, etc.) can be impregnated with an electrochemical modifier. In one embodiment, a method for preparing a polymer gel comprising an electrochemical modifier is provided. In another embodiment, methods for preparing pyrolyzed polymer gels comprising electrochemical modifiers or activated carbon materials comprising electrochemical modifiers is provided. Details of the variable process parameters of the various embodiments of the disclosed methods are described below.

### 1. Preparation of Polymer Gels

The polymer gels may be prepared by a sol gel process. For example, the polymer gel may be prepared by co-polymerizing one or more polymer precursors in an appropriate solvent. In one embodiment, the one or more polymer precursors are co-polymerized under acidic conditions. In some embodiments, a first polymer precursor is a phenolic compound and a second polymer precursor is an aldehyde compound. In one embodiment, of the method the phenolic compound is phenol, resorcinol, catechol, hydroquinone, phloroglucinol, or a combination thereof; and the aldehyde compound is formaldehyde, acetaldehyde, propionaldehyde, butyraldehyde, benzaldehyde, cinnamaldehyde, or a combination thereof. In a further embodiment, the phenolic compound is resorcinol, phenol or a combination thereof, and the aldehyde compound is formaldehyde. In yet further embodiments, the phenolic compound is resorcinol and the aldehyde compound is formaldehyde.

In certain embodiments, an electrochemical modifier is incorporated during the above described polymerization process. For example, in some embodiments, an electrochemical modifier in the form of metal particles, metal paste, metal salt, metal oxide or molten metal can be dissolved or suspended into the mixture from which the gel resin is produced. In some specific embodiments, the electrochemical modifier is lead, for example in the form of a lead salt. Examples of lead salts in this context include, but are not limited to: lead acetate, lead orthoarsenate, lead pyroarsenate, lead bromide, lead caprate, lead carproate, lead caprylate, lead chlorate, lead chloride, lead fluoride, lead monooxide, lead nitrate, lead oxychloride, lead orthophosphate sulfate, lead sulfide, and lead tungstate. Combinations of the above lead salts may also be employed.

In some embodiments, the metal salt dissolved into the mixture from which the gel resin is produced is soluble in the reaction mixture. In this case, the mixture from which the gel resin is produced may contain an acid and/or alcohol which improves the solubility of the metal salt. The metal-containing polymer gel can be freeze dried, followed by pyrolysis and activation to result in metal-containing activated carbon suitable for use in hybrid carbon/metal energy storage devices as discussed in more detail below.

The sol gel polymerization process is generally performed under catalytic conditions. Accordingly, in some embodiments, preparing the polymer gel comprises co-polymerizing one or more polymer precursors in the presence of a catalyst. In some embodiments, the catalyst comprises a basic volatile catalyst. For example, in one embodiment, the basic volatile catalyst comprises ammonium carbonate, ammonium bicarbonate, ammonium acetate, ammonium hydroxide, or combinations thereof. In a further embodiment, the basic volatile catalyst is ammonium carbonate. In another further embodiment, the basic volatile catalyst is ammonium acetate.

The molar ratio of catalyst to phenolic compound may have an effect on the final properties of the polymer gel as well as the final properties of the carbon materials, for example. Thus, in some embodiments such catalysts are used in the range of molar ratios of 5:1 to 2000:1 phenolic compound:catalyst. In some embodiments, such catalysts can be used in the range of molar ratios of 20:1 to 200:1 phenolic compound:catalyst. For example in other embodiments, such catalysts can be used in the range of molar ratios of 5:1 to 100:1 phenolic compound:catalyst.

The reaction solvent is another process parameter that may be varied to obtain the desired properties (e.g., surface area, porosity, purity, etc.) of the polymer gels and carbon materials. In some embodiments, the solvent for preparation of the polymer gel is a mixed solvent system of water and a miscible co-solvent. For example, in certain embodiments the solvent comprises a water miscible acid. Examples of water miscible acids include, but are not limited to, propionic acid, acetic acid, and formic acid. In further embodiments, the solvent comprises a ratio of water-miscible acid to water of 99:1, 90:10, 75:25, 50:50, 25:75, 10:90 or 1:90. In other embodiments, acidity is provided by adding a solid acid to the reaction solvent.

In some other embodiments of the foregoing, the solvent for preparation of the polymer gel is acidic. For example, in certain embodiments the solvent comprises acetic acid. For example, in one embodiment, the solvent is 100% acetic acid. In other embodiments, a mixed solvent system is provided, wherein one of the solvents is acidic. For example, in one embodiment of the method the solvent is a binary solvent comprising acetic acid and water. In further embodiments, the solvent comprises a ratio of acetic acid to water of 99:1, 90:10, 75:25, 50:50, 25:75, 20:80, 10:90 or 1:90. In other embodiments, acidity is provided by adding a solid acid to the reaction solvent.

In some embodiments, the electrochemical modifier is incorporated into the polymer gel after the polymerization step, for example either before or after drying of the polymer gel. For example, in some embodiments wherein the electrochemical modifier comprises sulfur, the polymer gel (either before or after drying) may be impregnated with the electrochemical modifier by immersion in a thiophene solution. Other sulfur containing solvents are also useful in this context. In some other embodiments, the polymer gel (either before or after drying) is impregnated with electrochemical modifier by immersion in a metal salt solution or suspension. The metal salt solution or suspension may comprise acids and/or alcohols to improve solubility of the metal salt. In some embodiments, the metal salt is a lead salt. Lead salts in this context include, but are not limited to, those described above. In yet another variation, the polymer gel (either before or after drying) is contacted with a paste comprising the electrochemical modifier. In yet another variation, the polymer gel (either before or after drying) is contacted with a metal or metal oxide sol comprising the desired electrochemical modifier. The sol is a nanophase colloidal suspension which is maintained using control over pH and liquid solid interfacial properties such as surface tension, polarity, and solvent solid interactions.

Some embodiments of the disclosed method do not comprise a solvent exchange step (*e.g*., exchange t-butanol for water) prior to drying (*e.g*., lyophilization). For example, in one embodiment of any of the methods described herein, before freezing, the polymer gel or polymer gel particles are rinsed with water. In one embodiment, the average diameter of the polymer gel particles prior to freezing is less than 25 mm, for example, between 0.001 mm and 25 mm; alternately, the average diameter of the polymer gel particles prior to freezing is between 0.01 mm and 15 mm, for example, between 1.0 mm and 15 mm. In some examples, the polymer gel particles are between 1 mm and 10 mm. In further embodiments, the polymer gel particles are frozen via immersion in a medium having a temperature of below about -10 °C, for example, below about -20 °C, or alternatively below about -30 °C. For example, the medium may be liquid nitrogen or ethanol (or other organic solvent) in dry ice or ethanol cooled by another means. In some embodiments, drying under vacuum comprises subjecting the frozen particles to a vacuum pressure of below about 1400 mTorr.

Other methods of rapidly freezing the polymer gel particles are also envisioned. For example, in another embodiment the polymer gel is rapidly frozen by co-mingling or physical mixing of polymer gel particles with a suitable cold solid, for example, dry ice (solid carbon dioxide). Another envisioned method comprises using a blast freezer with a metal plate at -60 °C to rapidly remove heat from the polymer gel particles scattered over its surface. Another method of rapidly cooling water in a polymer gel particle is to snap freeze the particle by pulling a high vacuum very rapidly (the degree of vacuum is such that the temperature corresponding to the equilibrium vapor pressure allows for freezing). Yet another method for rapid freezing comprises admixing a polymer gel with a suitably cold gas. In some embodiments the cold gas may have a temperature below about -10 °C. In some embodiments the cold gas may have a temperature below about -20 °C. In some embodiments the cold gas may have a temperature below about -30 °C. In yet other embodiments, the gas may have a temperature of about -196 °C. For example, in some embodiments, the gas is nitrogen. In yet other embodiments, the gas may have a temperature of about -78 °C. For example, in some embodiments, the gas is carbon dioxide.

In other embodiments, the polymer gel particles are frozen on a lyophilizer shelf at a temperature of -20 °C or lower. For example, in some embodiments the polymer gel particles are frozen on the lyophilizer shelf at a temperature of -30 °C or lower. In some other embodiments, the polymer gel monolith is subjected to a freeze thaw cycle (from room temperature to -20 °C or lower and back to room temperature), physical disruption of the freeze-thawed gel to create particles, and then further lyophilization processing. For example, in some embodiments, the polymer gel monolith is subjected to a freeze thaw cycle (from room temperature to -30 °C or lower and back to room temperature), physical disruption of the freeze-thawed gel to create particles, and then further lyophilization processing.

In some embodiments of the methods described herein, the molar ratio of phenolic precursor to catalyst is from about 5:1 to about 2000:1 or the molar ratio of phenolic precursor to catalyst is from about 20:1 to about 200:1. In further embodiments, the molar ratio of phenolic precursor to catalyst is from about 25:1 to about 100:1. In further embodiments, the molar ratio of phenolic precursor to catalyst is from about 25:1 to about 50:1. In further embodiments, the molar ratio of phenolic precursor to catalyst is from about 100:1 to about 5:1.

In the specific embodiment wherein one of the polymer precursors is resorcinol and another polymer precursor is formaldehyde, the resorcinol to catalyst ratio can be varied to obtain the desired properties of the resultant polymer gel and carbon materials. In some embodiments of the methods described herein, the molar ratio of resorcinol to catalyst is from about 10:1 to about 2000:1 or the molar ratio of resorcinol to catalyst is from about 20:1 to about 200:1. In further embodiments, the molar ratio of resorcinol to catalyst is from about 25:1 to about 100:1. In further embodiments, the molar ratio of resorcinol to catalyst is from about 25:1 to about 50:1. In further embodiments, the molar ratio of resorcinol to catalyst is from about 100:1 to about 5:1.

Polymerization to form a polymer gel can be accomplished by various means described in the art and may include addition of an electrochemical modifier. For instance, polymerization can be accomplished by incubating suitable polymer precursor materials, and optionally an electrochemical modifier, in the presence of a suitable catalyst for a sufficient period of time. The time for polymerization can be a period ranging from minutes or hours to days, depending on the temperature (the higher the temperature the faster, the reaction rate, and correspondingly, the shorter the time required). The polymerization temperature can range from room temperature to a temperature approaching (but lower than) the boiling point of the starting solution. For example, the temperature can range from about 20 °C to about 90 °C. In the specific embodiment wherein one polymer precursor is resorcinol and one polymer precursor is formaldehyde, the temperature can range from about 20 °C to about 100 °C, typically from about 25 °C to about 90 °C. In some embodiments, polymerization can be accomplished by incubation of suitable synthetic polymer precursor materials in the presence of a catalyst for at least 24 hours at about 90 °C. Generally polymerization can be accomplished in between about 6 and about 24 hours at about 90 °C, for example between about 18 and about 24 hours at about 90 °C.

The polymer precursor materials as disclosed herein include (a) alcohols, phenolic compounds, and other mono- or polyhydroxy compounds and (b) aldehydes, ketones, and combinations thereof. Representative alcohols in this context include straight chain and branched, saturated and unsaturated alcohols. Suitable phenolic compounds include polyhydroxy benzene, such as a dihydroxy or trihydroxy benzene. Representative polyhydroxy benzenes include resorcinol (*i.e*., 1,3-dihydroxy benzene), catechol, hydroquinone, and phloroglucinol. Mixtures of two or more polyhydroxy benzenes can also be used. Phenol (monohydroxy benzene) can also be used. Representative polyhydroxy compounds include sugars, such as glucose, and other polyols, such as mannitol. Aldehydes in this context include: straight chain saturated aldeydes such as methanal (formaldehyde), ethanal (acetaldehyde), propanal (propionaldehyde), butanal (butyraldehyde), and the like; straight chain unsaturated aldehydes such as ethenone and other ketenes, 2-propenal (acrylaldehyde), 2-butenal (crotonaldehyde), 3 butenal, and the like; branched saturated and unsaturated aldehydes; and aromatic-type aldehydes such as benzaldehyde, salicylaldehyde, hydrocinnamaldehyde, and the like. Suitable ketones include: straight chain saturated ketones such as propanone and 2 butanone, and the like; straight chain unsaturated ketones such as propenone, 2 butenone, and 3-butenone (methyl vinyl ketone) and the like; branched saturated and unsaturated ketones; and aromatic-type ketones such as methyl benzyl ketone (phenylacetone), ethyl benzyl ketone, and the like. The polymer precursor materials can also be combinations of the precursors described above.

In some embodiments, one polymer precursor is an alcohol-containing species and another polymer precursor is a carbonyl-containing species. The relative amounts of alcohol-containing species (*e.g*., alcohols, phenolic compounds and mono-or poly- hydroxy compounds or combinations thereof) reacted with the carbonyl containing species (*e.g*. aldehydes, ketones or combinations thereof) can vary substantially. In some embodiments, the ratio of alcohol-containing species to aldehyde species is selected so that the total moles of reactive alcohol groups in the alcohol-containing species is approximately the same as the total moles of reactive carbonyl groups in the aldehyde species. Similarly, the ratio of alcohol-containing species to ketone species may be selected so that the total moles of reactive alcohol groups in the alcohol containing species is approximately the same as the total moles of reactive carbonyl groups in the ketone species. The same general 1:1 molar ratio holds true when the carbonyl-containing species comprises a combination of an aldehyde species and a ketone species.

The total solids content in the solution or suspension prior to polymer gel formation can be varied. The weight ratio of resorcinol to water is from about 0.05 to 1 to about 0.70 to 1. Alternatively, the ratio of resorcinol to water is from about 0.15 to 1 to about 0.6 to 1. Alternatively, the ratio of resorcinol to water is from about 0.15 to 1 to about 0.35 to 1. Alternatively, the ratio of resorcinol to water is from about 0.25 to 1 to about 0.5 to 1. Alternatively, the ratio of resorcinol to water is from about 0.3 to 1 to about 0.4 to 1.

Examples of solvents useful in the preparation of the polymer gels disclosed herein include but are not limited to water or alcohols such as, for example, ethanol, t butanol, methanol or combinations thereof as well as aqueous mixtures of the same. Such solvents are useful for dissolution of the polymer precursor materials, for example dissolution of the phenolic compound. In addition, in some processes such solvents are employed for solvent exchange in the polymer gel (prior to freezing and drying), wherein the solvent from the polymerization of the precursors, for example, resorcinol and formaldehyde, is exchanged for a pure alcohol. In one embodiment of the present application, a polymer gel is prepared by a process that does not include solvent exchange.

Suitable catalysts in the preparation of the polymer gels include volatile basic catalysts that facilitate polymerization of the precursor materials into a monolithic polymer. The catalyst can also comprise various combinations of the catalysts described above. In embodiments comprising phenolic compounds, such catalysts can be used in the range of molar ratios of 5:1 to 200:1 phenolic compound:catalyst. For example, in some specific embodiments such catalysts can be used in the range of molar ratios of 25:1 to 100:1 phenolic compound:catalyst.

### 2. Creation of Polymer Gel Particles

A monolithic polymer gel can be physically disrupted to create smaller particles according to various techniques known in the art. The resultant polymer gel particles generally have an average diameter of less than about 30 mm, for example, in the size range of about 1 mm to about 25 mm, or between about 1 mm to about 5 mm or between about 0.5 mm to about 10 mm. Alternatively, the size of the polymer gel particles can be in the range below about 1 mm, for example, in the size range of about 10 to 1000 microns. Techniques for creating polymer gel particles from monolithic material include manual or machine disruption methods, such as sieving, grinding, milling, or combinations thereof. Such methods are well-known to those of skill in the art. Various types of mills can be employed in this context such as roller, bead, and ball mills and rotary crushers and similar particle creation equipment known in the art.

In a specific embodiment, a roller mill is employed. A roller mill has three stages to gradually reduce the size of the gel particles. The polymer gels are generally very brittle and are not damp to the touch. Consequently they are easily milled using this approach; however, the width of each stage must be set appropriately to achieve the targeted final mesh. This adjustment is made and validated for each combination of gel recipe and mesh size. Each gel is milled via passage through a sieve of known mesh size. Sieved particles can be temporarily stored in sealed containers.

In one embodiment, a rotary crusher is employed. The rotary crusher has a screen mesh size of about 1/8^{th} inch. In another embodiment, the rotary crusher has a screen mesh size of about 3/8^{th} inch. In another embodiment, the rotary crusher has a screen mesh size of about 5/8^{th} inch. In another embodiment, the rotary crusher has a screen mesh size of about 3/8^{th} inch.

Milling can be accomplished at room temperature according to methods well known to those of skill in the art. Alternatively, milling can be accomplished cryogenically, for example by co-milling the polymer gel with solid carbon dioxide (dry ice) particles. In this embodiment, the two steps of (a) creating particles from the monolithic polymer gel and (b) rapid, multidirectional freezing of the polymer gel are accomplished in a single process.

### 3. Rapid Freezing of Polymer Gels

After the polymer gel particles are formed from the monolithic polymer gel, freezing of the polymer gel particles may be accomplished rapidly and in a multi-directional fashion as described in more detail above. Freezing slowly and in a unidirectional fashion, for example by shelf freezing in a lyophilizer, results in dried material having a very low surface area. Similarly, snap freezing (*i.e*., freezing that is accomplished by rapidly cooling the polymer gel particles by pulling a deep vacuum) also results in a dried material having a low surface area. As disclosed herein rapid freezing in a multidirectional fashion can be accomplished by rapidly lowering the material temperature to at least about-10 °C or lower, for example, -20 °C or lower, or for example, to at least about -30 °C or lower. Rapid freezing of the polymer gel particles creates a fine ice crystal structure within the particles due to widespread nucleation of ice crystals, but leaves little time for ice crystal growth. This provides a high specific surface area between the ice crystals and the hydrocarbon matrix, which is necessarily excluded from the ice matrix.

The concept of extremely rapid freezing to promote nucleation over crystal growth can also be applied to mixed solvent systems. In one embodiment, as the mixed solvent system is rapidly cooled, the solvent component that predominates will undergo crystallization at its equilibrium melting temperature, with increased concentration of the co-solvent(s) and concomitant further freezing point depression. As the temperature is further lowered, there is increased crystallization of the predominant solvent and concentration of co-solvent(s) until the eutectic composition is reached, at which point the eutectic composition undergoes the transition from liquid to solid without further component concentration or product cooling until complete freezing is achieved. In the specific case of water and acetic acid (which as pure substances exhibit freezing points of 0 °C and 17 °C, respectively), the eutectic composition is comprised of approximately 59% acetic acid and 41% water and freezes at about - 27 °C. Accordingly, in one embodiment, the mixed solvent system is the eutectic composition, for example, in one embodiment the mixed solvent system comprises 59% acetic acid and 41% water.

### 4. Drying of Polymer Gels

In one embodiment, the frozen polymer gel particles containing a fine ice matrix are lyophilized under conditions designed to avoid collapse of the material and to maintain fine surface structure and porosity in the dried product. Generally drying is accomplished under conditions where the temperature of the product is kept below a temperature that would otherwise result in collapse of the product pores, thereby enabling the dried material to retain an extremely high surface area.

The structure of the final carbon material is reflected in the structure of the dried polymer gel which in turn is established by the polymer gel properties. These features can be created in the polymer gel using a sol-gel processing approach as described herein, but if care is not taken in removal of the solvent, then the structure is not preserved. It is of interest to both retain the original structure of the polymer gel and modify its structure with ice crystal formation based on control of the freezing process. In some embodiments prior to drying, the aqueous content of the polymer gel is in the range of about 50% to about 99%. In certain embodiments upon drying, the aqueous content of the polymer cryogel is about 10%, alternately less than about 5% or less than about 2.5%.

A lyophilizer chamber pressure of about 2250 microns results in a primary drying temperature in the drying product of about -10 °C. Drying at about 2250 micron chamber pressure or lower case provides a product temperature during primary drying that is no greater than about -10 °C. As a further illustration, a chamber pressure of about 1500 microns results in a primary drying temperature in the drying product of about -15 °C. Drying at about 1500 micron chamber pressure or lower provides a product temperature during primary drying that is no greater than about -15 °C. As yet a further illustration, a chamber pressure of about 750 microns results in a primary drying temperature in the drying product of about -20 °C. Drying at 750 micron chamber pressure or lower provides a product temperature during primary drying that is no greater than about -20 °C. As yet a further illustration, a chamber pressure of about 300 microns results in a primary drying temperature in the drying product of about -30 °C. Drying at 300 micron chamber pressure or lower provides a product temperature during primary drying that is no greater than about -30 °C.

In some embodiments, the electrochemical modifier is incorporated into the carbon material after drying of the polymer gel. For example, the electrochemical modifier can be incorporated into the dried polymer gel by contacting the dried polymer gel with the electrochemical modifier, for example, colloidal metal, metal salt, metal paste, metal oxide or other sources of metals. In some specific embodiments, the electrochemical modifier comprises lead, and the lead is incorporated into the dried polymer gel by contacting the dried polymer gel with a lead salt in a manner and for a time sufficient to allow diffusion of the lead salt into the pores of the dried polymer gel. Lead salts useful in this context include those lead salts described above.

### 5. Pyrolysis and Activation of Polymer Gels

The polymer gels described above, can be further processed to obtain carbon materials. Such processing includes, for example, pyrolysis and/or activation. Generally, in the pyrolysis process, dried polymer gels are weighed and placed in a rotary kiln. The temperature ramp is set at 5 °C per minute, the dwell time and dwell temperature are set; cool down is determined by the natural cooling rate of the furnace. The entire process is usually run under an inert atmosphere, such as a nitrogen environment. Pyrolyzed samples are then removed and weighed. Other pyrolysis processes are well known to those of skill in the art.

In some embodiments, the electrochemical modifier is incorporated into the carbon material after pyrolysis of the dried polymer gel. For example, the electrochemical modifier can be incorporated into the pyrolyzed polymer gel by contacting the pyrolyzed polymer gel with the electrochemical modifier, for example, colloidal metal, molten metal, metal salt, metal paste, metal oxide or other sources of metals. In some specific embodiments, the electrochemical modifier comprises lead and the lead is incorporated into the pyrolyzed polymer gel by contacting the pyrolyzed polymer gel with a lead salt in a manner and for a time sufficient to allow diffusion of the lead salt into the pores of the pyrolyzed polymer gel. Lead salts useful in this context include those lead salts described above.

In some embodiments, pyrolysis dwell time (the period of time during which the sample is at the desired temperature) is from about 0 minutes to about 120 minutes, from about 0 minutes to about 60 minutes, from about 0 minutes to about 30 minutes, from about 0 minutes to about 10 minutes, from about 0 to 5 minutes or from about 0 to 1 minute.

Pyrolysis may also be carried out more slowly than described above. For example, in one embodiment the pyrolysis is carried out in about 120 to 480 minutes. In other embodiments, the pyrolysis is carried out in about 120 to 240 minutes.

In some embodiments, pyrolysis dwell temperature ranges from about 500 °C to 2400 °C. In some embodiments, pyrolysis dwell temperature ranges from about 650 °C to 1800 °C. In other embodiments pyrolysis dwell temperature ranges from about 700 °C to about 1200 °C. In other embodiments pyrolysis dwell temperature ranges from about 850 °C to about 1050 °C. In other embodiments pyrolysis dwell temperature ranges from about 800°C to about 900°C.

In some embodiments, the pyrolysis dwell temperature is varied during the course of pyrolysis. In one embodiment, the pyrolysis is carried out in a rotary kiln with separate, distinct heating zones. The temperature for each zone is sequentially decreased from the entrance to the exit end of the rotary kiln tube. In one embodiment, the pyrolysis is carried out in a rotary kiln with separate distinct heating zones, and the temperature for each zone is sequentially increased from entrance to exit end of the rotary kiln tube.

Activation time and activation temperature both have a large impact on the performance of the resulting activated carbon material, as well as the manufacturing cost thereof. Increasing the activation temperature and the activation dwell time results in higher activation percentages, which generally correspond to the removal of more material compared to lower temperatures and shorter dwell times. Activation temperature can also alter the pore structure of the carbon where lower temperatures result in more microporous carbon and higher temperatures result in mesoporosity. This is a result of the activation gas diffusion limited reaction that occurs at higher temperatures and reaction kinetic driven reactions that occur at lower temperature. Higher activation percentage often increases performance of the final activated carbon, but it also increases cost by reducing overall yield. Improving the level of activation corresponds to achieving a higher performance product at a lower cost.

Pyrolyzed polymer gels may be activated by contacting the pyrolyzed polymer gel with an activating agent. Many gases are suitable for activating, for example gases which contain oxygen. Non-limiting examples of activating gases include carbon dioxide, carbon monoxide, steam, oxygen and combinations thereof. Activating agents may also include corrosive chemicals such as acids, bases or salts (e.g., phosphoric acid, acetic acid, citric acid, formic acid, oxalic acid, uric acid, lactic acid, potassium hydroxide, sodium hydroxide, zinc chloride, etc.). Other activating agents are known to those skilled in the art.

In some embodiments, the activation time is between 1 minute and 48 hours. In other embodiments, the activation time is between 1 minute and 24 hours. In other embodiments, the activation time is between 5 minutes and 24 hours. In other embodiments, the activation time is between 1 hour and 24 hours. In further embodiments, the activation time is between 12 hours and 24 hours. In certain other embodiments, the activation time is between 30 min and 4 hours. In some further embodiments, the activation time is between 1 hour and 2 hours.

Pyrolyzed polymer gels may be activated using any number of suitable apparatuses known to those skilled in the art, for example, fluidized beds, rotary kilns, elevator kilns, roller hearth kilns, pusher kilns, etc. In one embodiment of the activation process, samples are weighed and placed in a rotary kiln, for which the automated gas control manifold is set to ramp at a 20 °C per minute rate. Carbon dioxide is introduced to the kiln environment for a period of time once the proper activation temperature has been reached. After activation has occurred, the carbon dioxide is replaced by nitrogen and the kiln is cooled down. Samples are weighed at the end of the process to assess the level of activation. Other activation processes are well known to those of skill in the art. In some of the embodiments disclosed herein, activation temperatures may range from 800 °C to 1300 °C. In another embodiment, activation temperatures may range from 800 °C to 1050 °C. In another embodiment, activation temperatures may range from about 850 °C to about 950 °C. One skilled in the art will recognize that other activation temperatures, either lower or higher, may be employed.

The degree of activation is measured in terms of the mass percent of the pyrolyzed dried polymer gel that is lost during the activation step. In one embodiment of the methods described herein, activating comprises a degree of activation from 5% to 90%; or a degree of activation from 10% to 80%; in some cases activating comprises a degree of activation from 40% to 70%, or a degree of activation from 45% to 65%.

In some embodiments, the electrochemical modifier is incorporated into the carbon material after activation of the pyrolyzed polymer gel. For example, the electrochemical modifier can be incorporated into the activated carbon material by contacting the activated carbon material with the electrochemical modifier, for example, molten metal, colloidal metal, metal salt, metal paste, metal oxide or other sources of metals. In some specific embodiments, the electrochemical modifier comprises lead and the lead is incorporated into the pyrolyzed polymer gel by contacting the activated carbon material with a lead salt in a manner and for a time sufficient to allow diffusion of the lead salt into the pores of activated carbon material. Lead salts useful in this context include those lead salts described above.

In one embodiment, micropores, mesopores and macropores of the carbon material contain the electrochemical modifier. In another, related embodiment, both micropores, mesopores and macropores of the carbon material are impregnated with the electrochemical modifier. The electrochemical modifier is then preferentially washed from the mesopores and macropores resulting in a carbon material comprising an electrochemical modifier predominantly present in the micropores. In another embodiment, impregnation of a carbon material with an electrochemical modifier is carried out under mild conditions such that the mesopores are impregnated with electrochemical modifier (but no substantial impregnation into micropores) resulting in a material comprising an electrochemical modifier predominantly present in mesopores.

Examples of forms of carbon that can be impregnated with electrochemical modifiers as described above are not limited to carbon materials prepared by a sol gel process. Such forms of carbon include, but are not limited to: carbon monoliths, carbon particles, carbon nanotubes, and carbon fibers. The carbon can be present in more than one form, for example a combination of carbon particles and carbon monoliths, or carbon particles and carbon fibers. The employment of a combination of different forms of carbon may facilitate binding of the electrochemical modifier into the carbon matrix. In some embodiments, a carbon monolith may be formed from a polymer gel prepared in the presence of carbon fibers, with the purpose of retention of the monolith upon freezing, drying, and subsequent pyrolysis, activation, and metal impregnation. In another embodiment, bulking and/or glass-forming agents are incorporated into the polymer gel such that the monolith is retained upon freezing, drying, and subsequent pyrolysis, activation, and impregnation with electrochemical modifier. Examples of bulking and/or glass-forming agents in this context include, but are not limited to: sugars and poly(ols) such as sucrose and mannitol, and linear or branched polymers such as poly(ethylene glycol)s and dextran.

### C. Characterization of Polymer Gels and Carbon Materials

The structural properties of the final carbon material and intermediate polymer gels may be measured using Nitrogen sorption at 77K, a method known to those of skill in the art. The final performance and characteristics of the finished carbon material is important, but the intermediate products (both dried polymer gel and pyrolyzed, but not activated, polymer gel), can also be evaluated, particularly from a quality control standpoint, as known to those of skill in the art. The Micromeretics ASAP 2020 is used to perform detailed micropore and mesopore analysis, which reveals a pore size distribution from 0.35 nm to 50 nm in some embodiments. The system produces a nitrogen isotherm starting at a pressure of 10⁻⁷ atm, which enables high resolution pore size distributions in the sub 1 nm range. The software generated reports utilize a Density Functional Theory (DFT) method to calculate properties such as pore size distributions, surface area distributions, total surface area, total pore volume, and pore volume within certain pore size ranges.

The impurity and electrochemical modifier content of the carbon materials can be determined by any number of analytical techniques known to those of skill in the art. One particular analytical method useful within the context of the present disclosure is proton induced x-ray emission (PIXE). This technique is capable of measuring the concentration of elements having atomic numbers ranging from 11 to 92 at low ppm levels. Accordingly, in one embodiment the concentration of electrochemical modifier, as well as all other elements, present in the carbon materials is determined by PIXE analysis.

### D. Devices Comprising the Carbon Materials

The disclosed carbon materials can be used as electrode material in any number of electrical energy storage and distribution devices. One such device is a hybrid carbon/metal battery, for example a carbon/lead acid battery. The high purity, surface area and porosity of the carbon materials impart improved electrical properties to electrodes prepared from the same. Accordingly, the present disclosure provides electrical energy storage devices having longer active life and improved power performance relative to devices containing other carbon materials. Specifically, because of the open-cell, porous network, and relatively small pore size of the carbon materials, the chemically active material of the positive and negative electrodes of an electrical energy storage device can be intimately integrated with the current collectors. The reaction sites in the chemically active carbon can therefore be close to one or more conductive carbon structural elements. Thus, electrons produced in the chemically active material at a particular reaction site must travel only a short distance through the active material before encountering one of the many conductive structural elements of a particular current collector.

In addition, the porosity of the disclosed carbon materials provides for a reservoir of electrolyte ions (e.g., sulfate ions) necessary for the charge and discharge in chemical reactions. The proximity of the electrolyte ions to the active material is much closer than in traditional electrodes, and as a result, devices (e.g., batteries) comprising electrodes incorporating the carbon material offer both improved specific power and specific energy values. In other words, these devices, when placed under a load, sustain their voltage above a predetermined threshold value for a longer time than devices comprising traditional current collectors made of lead, graphite plates, activated carbon without an electrochemical modifier and the like.

The increased specific power values offered by the disclosed devices also may translate into reduced charging times. Therefore, the disclosed devices may be suitable for applications in which charging energy is available for only a limited amount of time. For instance, in vehicles, a great deal of energy is lost during ordinary braking. This braking energy may be recaptured and used to charge a battery of, for example, a hybrid vehicle. The braking energy, however, is available only for a short period of time (e.g., while braking is occurring). Thus, any transfer of braking energy to a battery must occur during braking. In view of their reduced charging times, the devices of the present invention may provide an efficient means for storing such braking energy.

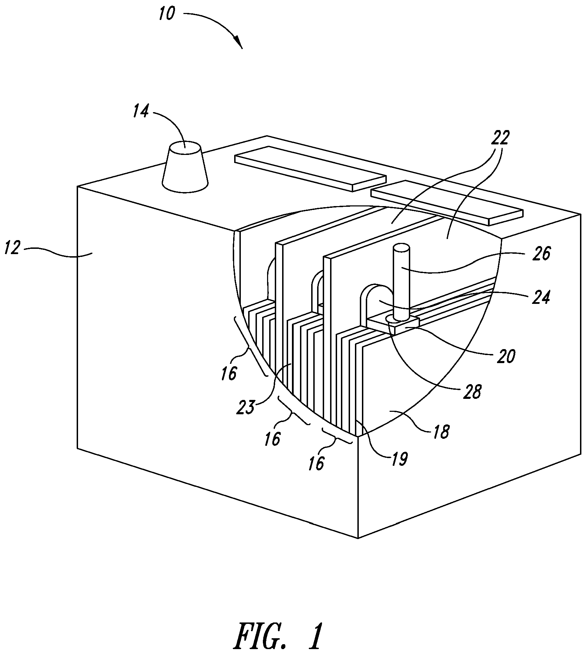

FIG. 1 provides an illustration of an energy storage device 10, according to one embodiment of the present disclosure. Energy storage device 10 may include various types of batteries. For example, in one embodiment, energy storage device **10** may include a lead acid battery. Other battery chemistries, however, may be used, such as those based on nickel, lithium, sodium-sulfur, zinc, metal hydrides or any other suitable chemistry or materials that can be used to provide an electrochemical potential.

Energy storage device **10** may include a housing **12**, terminals **14** (only one shown), and cells **16.** Each cell **16** may include one or more positive plates (*i.e*., electrodes) **18** and one or more negative plates **19.** In a lead acid battery, for example, positive plates **18** and negative plates **19** may be stacked in an alternating fashion. Plates **18** and **19** typically comprise an active material in electrical contact with a current collector. In each cell **16**, a bus bar **20** may be provided to connect positive plates **18** together. A similar bus bar (not shown) may be included to connect negative plates **19** together.

Each cell **16** may be electrically isolated from adjacent cells by a cell separator **22.** Moreover, positive plates **18** may be separated from negative plates **19** by a plate isolator **23.** Both cell separators **22** and plate isolators **23** may be made from electrically insulating materials that minimize the risk of two adjacent electrical conductors shorting together. To enable the free flow of electrolyte and/or ions produced by electrochemical reactions in energy storage device **10**, however, cell separators **22** and plate isolators **23** may be made from porous materials or materials conducive to ionic transport.

Depending on the chemistry of the energy storage device **10**, each cell **16** will have a characteristic electrochemical potential. For example, in a lead acid battery used in automotive and other applications, each cell may have a potential of about 2 volts. Cells **16** may be connected in series to provide the overall potential of the battery. As shown in FIG. 1, an electrical connector **24** may be provided to connect positive bus bar **20** of one cell **16** to a negative bus bar of an adjacent cell. In this way, six lead acid cells may be linked together in series to provide a desired total potential of about 12 volts, for example. Alternative, electrical configurations may be possible depending on the type of battery chemistry employed and the total potential desired.

Once the total desired potential has been provided using an appropriate configuration of cells **16**, this potential may be conveyed to terminals **14** on housing **12** using terminal leads **26.** These terminal leads **26** may be electrically connected to any suitable electrically conductive components present in energy storage device **10.** For example, as illustrated in FIG. 1, terminal leads **26** may be connected to positive bus bar **20** and a negative bus bar of another cell **16.** Each terminal lead **26** may establish an electrical connection between a terminal **14** on housing **12** and a corresponding positive bus bar **20** or negative bus bar (or other suitable electrically conductive elements) in energy storage device **10.**

Energy storage device **10** may include aqueous or solid electrolytic materials that at least partially fill a volume between positive plates **18** and negative plates **19.** In a lead acid battery, for example, the electrolytic material may include an aqueous solution of sulfuric acid and water. Nickel-based batteries may include alkaline electrolyte solutions that include a base, such as potassium hydroxide, mixed with water. It should be noted that other acids and other bases may be used to form the electrolytic solutions of the disclosed batteries.

Electrode plates **18** and **19** may each include a current collector and an active material disposed on the current collector. In certain embodiments, the active material of either electrode plate **18** or **19** or both comprises a carbon material comprising an electrochemical modifier. In some embodiments, the electrochemical modifier comprises lead, tin, antimony, bismuth, arsenic, tungsten, silver, zinc, cadmium, indium, sulfur, silicon or combinations thereof. In other specific embodiments, the electrochemical modifier comprises lead, for example elemental lead, lead (II) oxide, lead (IV) oxide or combinations thereof. In yet other embodiment, the carbon material is mesoporous, and in other embodiments the carbon material is microporous.

In other embodiments, the active material of either electrode plate **18** or **19** or both comprises a paste of lead, lead (II) oxide, lead (IV) oxide or combinations thereof comprises a carbon material comprising an electrochemical modifier. While not wishing to be bound by theory, it is believed that the presence of certain elements, in combination with the high surface area, porosity and purity of the disclosed carbon materials, is expected to improve the performance of lead/acid batteries employing traditional lead pastes when such carbon materials are admixed with the lead paste. Accordingly, in some embodiments the present disclosure provides a lead/acid battery, wherein, a carbon material comprising an electrochemical modifier is admixed with the lead paste of one of the electrode plates. In certain embodiments of the foregoing, the electrochemical modifier comprises lead, tin, antimony, bismuth, arsenic, tungsten, silver, zinc, cadmium, indium, sulfur, silicon or combinations thereof. In yet other embodiment, the carbon material is mesoporous, and in other embodiments the carbon material is microporous. Other battery chemistries as described above (*e.g*., nickel, lithium, etc.) are expected to benefit from the use of the disclosed carbon materials and the above described embodiment is not limited to lead/acid battery chemistries.

In some other embodiments, the present disclosure provides a hybrid device comprising one or more battery electrodes and one or more supercapacitor (*i.e*., ultracapacitor) electrodes. These devices comprise improved performance properties compared to known batteries or known supercapacitors. Supercapacitor electrodes are described in detail in co-owned U.S. Patent No. 7,835,136, which is hereby incorporated in its entirety, and generally comprise a carbon material, a binder and an electrode and find utility in a number of electrical storage and distribution devices. Supercapacitor electrodes of certain embodiments herein may also comprise a current collector, for example, a current collector comprising lead.

The hybrid device may comprise a positive battery electrode and a negative supercapacitor electrode. For example, in some embodiments, the positive battery electrode comprises the disclosed carbon materials comprising an electrochemical modifier and the negative supercapacitor electrode comprises activated carbon. The electrochemical modifier may be any of those described above. Accordingly, in some embodiments the positive battery electrode comprises a carbon material comprising lead, lead oxides, lead sulfate or combinations thereof and the supercapacitor comprises activated carbon, for example ultrapure activated carbon.

In other embodiments of the hybrid device, the supercapacitor electrode comprises activated carbon, for example, ultrapure activated carbon. In other devices, the supercapacitor electrode comprises a carbon material comprising an electrochemical modifier. For example, the supercapacitor electrode may comprise activated carbon impregnated with lead, sulfur, oxides thereof or combinations thereof. Accordingly, in one embodiment the hybrid device comprises a positive battery electrode comprising a carbon material comprising an electrochemical modifier and further comprises a negative supercapacitor electrode comprising a carbon material comprising an electrochemical modifier. In some embodiments of the foregoing device, the electrochemical modifier in the positive battery electrode comprises lead, oxides thereof or combinations thereof. In some other embodiments of the foregoing device, the electrochemical modifier in the negative supercapacitor electrode comprises lead, sulfur, oxides thereof or combinations thereof.

In another embodiment, the present disclosure provides an electrical energy storage device comprising:
a) at least one positive electrode comprising a first active material in electrical contact with a first current collector;
b) at least one negative electrode comprising a second active material in electrical contact with a second current collector; and
c) an electrolyte;
wherein the positive electrode and the negative electrode are separated by an inert porous separator, and wherein at least one of the first or second active materials comprises the carbon material. In some embodiments of the above device, the electrochemical modifier comprises lead, tin, antimony, bismuth, arsenic, tungsten, silver, zinc, cadmium, indium, sulfur, silicon, oxides thereof, compounds comprising the same or combinations thereof. In certain embodiments, the device is a battery, for example, a lead acid battery and the electrochemical modifier comprises lead. Active materials within the scope of the present disclosure include materials capable of storing and/or conducting electricity (e.g., an electrochemical modifier).

In other embodiments, the electrical energy storage device comprises one or more lead-based positive electrodes and one or more carbon-based negative electrodes. The carbon-based electrode comprises a carbon material comprising an electrochemical modifier, for example, lead, lead oxide or a lead salt within the carbon matrix. In other embodiments of the disclosed device, both positive and negative electrode components optionally comprise carbon, for example, a carbon material comprising an electrochemical modifier. For example, either the positive or negative electrode components, or both, comprise a carbon material comprising an electrochemical modifier. In certain embodiments, the electrochemical modifier comprises lead, lead oxide or a lead salt in the carbon matrix. In further embodiments of the foregoing, the positive and/or negative electrodes further comprise one or more other elements in addition to lead within the carbon porosity which act to enhance the performance of the active materials. Such other elements include, but are not limited to, lead, tin, antimony, bismuth, arsenic, tungsten, silver, zinc, cadmium, indium, sulfur, silicon and combinations thereof as well as oxides of the same and compounds comprising the same.

The disclosed carbon materials find utility in electrodes for use in lead acid batteries. Accordingly, one embodiment of the present disclosure is a hybrid lead-carbon-acid electrical energy storage device comprising at least one cell, wherein the at least one cell comprises a plurality of carbon-lead-based positive electrodes and one or more carbon-lead-based negative electrodes. The device further comprises separators between the cells, an acid electrolyte (e.g., aqueous sulfuric acid), and a casing to contain the device.

In some embodiments of the hybrid lead-carbon-acid energy storage device, each carbon-based negative electrode comprises a highly conductive current collector; carbon material comprising an electrochemical modifier adhered to and in electrical contact with at least one surface of the current collector, and a tab element extending above the top edge of the negative or positive electrode. For example, each carbon-lead-based positive electrode may comprise a lead-based current collector and a lead dioxide-based active material paste adhered to, and in electrical contact with, the surfaces thereof, and a tab element extending above the top edge of the positive electrode. The lead dioxide based active material comprises activated carbon comprising a lead or lead oxide electrochemical modifier within the porosity of the carbon material. The lead or lead oxide electrochemical modifier serves as the energy storing active material for the cathode.

In other embodiments of the hybrid lead-carbon-acid energy storage device, the front and back surfaces of a lead-based current collector each comprise a matrix of raised and lowered portions with respect to the mean plane of the lead-based current collector, and further comprises slots formed between the raised and lowered portions thereof. In this embodiment, the aggregate thickness of the lead-based current collector is greater than the thickness of the lead-based material forming the current collector.

A negative electrode may comprise a conductive current collector; a carbon material comprising an electrochemical modifier; and a tab element extending from a side, for example from above a top edge, of the negative electrode. Negative electrode tab elements may be electrically secured to one another by a cast-on strap, which may comprise a connector structure. The active material may be in the form of a sheet that is adhered to, and in electrical contact, with the current collector matrix. In order for the carbon material to be adhered to and in electrical contact with the current collector matrix, carbon particles may be mixed with a suitable binder substance such as PTFE or ultra high molecular weight polyethylene (e.g., having a molecular weight numbering in the millions, usually between about 2 and about 6 million). In some embodiments, the binder material does not exhibit thermoplastic properties or exhibits minimal thermoplastic properties.

In certain embodiments, each battery cell comprises four positive electrodes which are lead-based and comprise lead dioxide active material. Each positive electrode comprises a highly conductive current collector comprising porous carbon material adhered to each face thereof and lead dioxide contained within the carbon. Also, in this embodiment, the battery cell comprises three negative electrodes, each of which comprises a highly conductive current collector comprising porous carbon material adhered to each face thereof where this porous carbon material comprises lead within the carbon.

In other embodiments, each cell comprises a plurality of positive electrodes and a plurality of negative electrodes that are placed in alternating order. Between each adjacent pair of positive electrodes and the negative electrodes, there is placed a separator. Each of the positive electrodes is constructed so as to have a tab extending above the top edge of each respective electrode; and each of the negative electrodes has a tab extending above the top edge of each of the respective negative electrodes. In certain variations, the separators are made from a suitable separator material that is intended for use with an acid electrolyte, and that the separators may be made from a woven material such as a non-woven or felted material, or a combination thereof. In other embodiments, the material of the current collector is sheet lead, which may be cast or rolled and punched or machined.

Each cell may comprise alternating positive and negative plates, and an electrolyte may be disposed in a volume between the positive and negative plates. Additionally, the electrolyte can occupy some or all of the pore space in the materials included in the positive and negative plates. In one embodiment, the electrolyte includes an aqueous electrolytic solution within which the positive and negative plates may be immersed. The electrolytic solution composition may be chosen to correspond with a particular battery chemistry. In lead acid batteries, for example, the electrolyte may include a solution of sulfuric acid and distilled water. Other acids, however, may be used to form the electrolytic solutions of the disclosed batteries.

In another embodiment, the electrolyte may include a silica gel. This silica gel electrolyte can be added to the battery such that the gel at least partially fills a volume between the positive and negative plate or plates of cell.

In some other variations, the positive and negative plates of each cell may include a current collector packed or coated with a chemically active material. Chemical reactions in the active material disposed on the current collectors of the battery enable storage and release of electrical energy. The composition of this active material, and not the current collector material, determines whether a particular current collector functions either as a positive or a negative plate.

The composition of the chemically active material also depends on the chemistry of the device. For example, lead acid batteries may include a chemically active material comprising, for example, an oxide or salt of lead. In certain embodiments, the chemically active material may comprise lead dioxide (PbO₂). The chemically active material may also comprise various additives including, for example, varying percentages of free lead, structural fibers, conductive materials, carbon, and extenders to accommodate volume changes over the life of the battery. In certain embodiments, the constituents of the chemically active material for lead acid batteries may be mixed with sulfuric acid and water to form a paste, slurry, or any other type of coating material.

The chemically active material in the form of a paste or a slurry, for example, may be applied to the current collectors of the positive and negative plates. The chemically active material may be applied to the current collectors by dipping, painting, or via any other suitable coating technique.

In certain embodiments, the positive and negative plates of a battery are formed by first depositing the chemically active material on the corresponding current collectors to make the plates. While not necessary in all applications, in certain embodiments, the chemically active material deposited on current collectors may be subjected to curing and/or drying processes. For example, a curing process may include exposing the chemically active materials to elevated temperature and/or humidity to encourage a change in the chemical and/or physical properties of the chemically active material.

After assembling the positive and negative plates to form cells, the battery may be subjected to a charging (*i.e*., formation) process. During this charging process, the composition of the chemically active materials may change to a state that provides an electrochemical potential between the positive and negative plates of the cells. For example, in a lead acid battery, the PbO active material of the positive plate may be electrically driven to lead dioxide (PbO₂), and the active material of the negative plate may be converted to sponge lead. Conversely, during subsequent discharge of a lead acid battery, the chemically active materials of both the positive and negative plates convert toward lead sulfate.

The carbon materials of the presently disclosed embodiments include a network of pores, which can provide a large amount of surface area for each current collector. For example, in certain embodiments of the above described devices the carbon material is mesoporous, and in other embodiments the carbon material is microporous. Current collectors comprising the carbon materials may exhibit more than 2000 times the amount of surface area provided by conventional current collectors. Further, a carbon layer may be fabricated to exhibit any combination of physical properties described above.

The substrate (*i.e*., support) for the active material may include several different material and physical configurations. For example, in certain embodiments, the substrate may comprise an electrically conductive material, glass, or a polymer. In certain embodiments, the substrate may comprise lead or polycarbonate. The substrate may be formed as a single sheet of material. Alternatively, the substrate may comprise an open structure, such as a grid pattern having cross members and struts.

The substrate may also comprise a tab for establishing an electrical connection to a current collector. Alternatively, especially in embodiments where substrate includes a polymer or material with low electrical conductivity, a carbon layer may be configured to include a tab of material for establishing an electrical connection with a current collector. In such an embodiment, the carbon used to form a tab and the carbon layer may be infused with a metal such as lead, silver, or any other suitable metal for aiding in or providing good mechanical and electrical contact to the carbon layer.

The carbon material may be physically attached to the substrate such that the substrate can provide support for the carbon material. In one embodiment, the carbon layer may be laminated to the substrate. For example, the carbon layer and substrate may be subjected to any suitable laminating process, which may comprise the application of heat and/or pressure, such that the carbon layer becomes physically attached to the substrate. In certain embodiments, heat and/or pressure sensitive laminating films or adhesives may be used to aid in the lamination process.

In other embodiments, the carbon material may be physically attached to the substrate via a system of mechanical fasteners. This system of fasteners may comprise any suitable type of fasteners capable of fastening a carbon layer to a support. For example, a carbon layer may be joined to a support using staples, wire or plastic loop fasteners, rivets, swaged fasteners, screws, etc. Alternatively, a carbon layer can be sewn to a support using wire thread, or other types of thread.

In addition to the two-layered current collector (*i.e*., carbon material plus substrate) described above, the presently disclosed embodiments include other types of current collectors in combination with the two-layered current collector. For example, current collectors suitable for use with the presently disclosed embodiments may be formed substantially from carbon alone. That is, a carbon current collector consistent with this embodiment would lack a support backing. The carbon current collector may, however, comprise other materials, such as, metals deposited on a portion of the carbon surface to aid in establishing electrical contact with the carbon current collector.

Other current collectors may be formed substantially from an electrically conductive material, such as lead. The current collector may be made from lead and may be formed to include a grid pattern of cross members and struts. In one embodiment, the current collector may include a radial grid pattern such that struts intersect cross members at an angle. Current collector may also include a tab useful for establishing electrical contact to the current collector.

In one embodiment, the current collector may be made from lead and may be formed to include a hexagonal grid pattern. Specifically, the structural elements of the current collector may be configured to form a plurality of hexagonally shaped interstices in a hexagonally close packed arrangement. The current collector may also include a tab useful for establishing electrical contact to the current collector.

Consistent with the present disclosure, cells may be configured to include several different current collector arrangements. In one embodiment, one or more negative plates of a cell may comprise a current collector having a carbon layer disposed on a substrate. In this embodiment, one or more positive plates of a cell may include a carbon current collector (*e.g*., a carbon layer not including a substrate) or a lead grid current collector (*e.g*., a lead grid collector not including a layer of carbon).

In another embodiment, one or more positive plates of a cell may include a current collector comprising a carbon layer deposited on a substrate. In this embodiment, one or more negative plates of a cell may include a carbon current collector (*e.g*., a carbon collector not including a substrate) or a lead grid current collector (*e.g*., a lead grid collector not including a layer of carbon).

In yet another embodiment, both one or more negative plates and one or more positive plates may include a current collector comprising a carbon layer deposited on a substrate. Thus, in this embodiment, the two-layered current collector may be incorporated into both the positive and the negative electrode plates.

By incorporating carbon into the positive and/or negative plates of a battery, corrosion of the current collectors may be suppressed. As a result, batteries consistent with the present disclosure may offer significantly longer service lives. Additionally, the disclosed carbon current collectors may be pliable, and therefore, they may be less susceptible to damage from vibration or shock as compared to current collectors made from graphite plates or other brittle materials. Batteries including carbon current collectors may perform well in vehicular applications, or other applications, where vibration and shock are common.

In another embodiment, the carbon material for use in the novel carbon lead energy storage device may also comprise certain metal and metal oxide additives that enhance electrochemical performance. To this end, the cathode paste comprising lead and lead oxides can be mixed intimately with activated carbon particles. Minor additions of certain other elements such as tin, antimony, bismuth, arsenic, tungsten, silver, zinc, cadmium, indium, silicon, oxides thereof, compounds comprising the same or combinations thereof offer the potential to increase the chemical energy storage efficiency of the positive active material. Some of these metal elements and their oxides act to replicate the lead dioxide crystal structure and provide additional nucleation sites for the charge discharge processes as well as an additional conductive network within the lead dioxide active material. These materials can be located within the pores of the activated carbon and on the carbon surface before the lead paste is applied. These metals can act as conductivity aids for the lead dioxide positive active material as well as increasing the efficiency of the lead dioxide active material through this increased conductivity network within the cathode. In certain embodiments, impurities such as arsenic, cobalt, nickel, iron, chromium and tellurium are minimized in the carbon and the electrode because they increase oxygen evolution on the cathode during the charge cycle.

In other embodiments, the carbon material does not contain significant quantities of metallic impurities such as sodium, potassium and especially calcium, magnesium, barium, strontium, chromium, nickel, iron and other metals, which form highly insoluble sulfate salts. These impurities will precipitate inside the pores of the carbon material and effectively impede its effectiveness. Sodium and potassium will neutralize an equi-molar amount of hydrogen ions and render them ineffective.

In another embodiment of the disclosure, the carbon for use in the hybrid carbon lead energy storage device may be structured with a predominance of mesopores, that is pores from 2 nm to 50 nm in size, that when mixed into the positive or negative electrodes will enhance the electrochemical performance. To this end, the cathode paste comprising lead and lead oxides can be mixed intimately with activated carbon particles and the anode paste comprising lead can be mixed intimately with activated carbon particles. These mesoporous carbons offer the ability to promote fluid electrolyte to fully penetrate the active material within the electrode. By increasing the fluid penetration within the electrode structure, the diffusion distances between the electrolyte ions (*e.g*., sulfate) and the active material is reduced and the chemical charge and discharge process can proceed more efficiently. In addition, the activated carbon used in this embodiment may also comprise a number of micropores less than 2 nm in size in conjunction with the mesopores.

### EXAMPLES

The polymer gels, cryogels, pyrolyzed cryogels and carbon materials disclosed in the following Examples were prepared according to the methods disclosed herein. Chemicals were obtained from commercial sources at reagent grade purity or better and were used as received from the supplier without further purification.

Unless indicated otherwise, the following conditions were generally employed for preparation of the carbon materials and precursors. Phenolic compound and aldehyde were reacted in the presence of a catalyst in a binary solvent system (e.g., water and acetic acid). The molar ratio of phenolic compound to aldehyde was typically 0.5 to 1. The reaction was allowed to incubate in a sealed container at temperatures of up to 85 C for up to 24 h. The resulting polymer hydrogel contained water, but no organic solvent; and was not subjected to solvent exchange of water for an organic solvent, such as t-butanol. The polymer hydrogel monolith was then physically disrupted, for example by grinding, to form polymer hydrogel particles having an average diameter of less than about 5 mm. Unless stated otherwise, the particles were then rapidly frozen, generally by immersion in a cold fluid (*e.g*., liquid nitrogen or ethanol/dry ice) and lyophilized. Generally, the lyophilizer shelf was pre-cooled to -30 °C before loading a tray containing the frozen polymer hydrogel particles on the lyophilizer shelf. The chamber pressure for lyophilization was typically in the range of 50 to 1000 mTorr and the shelf temperature was in the range of +10 to +25 °C. Alternatively, the shelf temperature can be set lower, for example in the range of 0 to + 10 °C. Alternatively, the shelf temperature can be set higher, for example in the range of 25 to +100 °C. Chamber pressure can be held in the range of 50 to 3000 mTorr. For instance, the chamber pressure can be controlled in the range of 150 to 300 mTorr.

The dried polymer hydrogel was typically pyrolyzed by heating in a nitrogen atmosphere at temperatures ranging from 800-1200 °C for a period of time as specified in the examples. Activation conditions generally comprised heating a pyrolyzed polymer hydrogel in a CO₂ atmosphere at temperatures ranging from 900-1000 °C for a period of time as specified in the examples. Specific pyrolysis and activation conditions were as described in the following examples.

Impregnation of the carbon materials with electrochemical modifiers was accomplished by including a source of the electrochemical modifier in the polymerization reaction or contacting the carbon material, or precursors of the same (*e.g*., polymer hydrogel, dried polymer hydrogel, pyrolyzed polymer gel, etc.), with a source of the electrochemical modifier as described more fully above and exemplified below.

### EXAMPLE 1

### PREPARATION OF DRIED POLYMER GEL

A polymer gel was prepared by polymerization of resorcinol and formaldehyde (0.5:1) in water and acetic acid (75:25) and ammonium acetate (RC=25, unless otherwise stated). The reaction mixture was placed at elevated temperature (incubation at 45 °C for about 6 h followed by incubation at 85 °C for about 24 h) to allow for gellation to create a polymer gel. Polymer gel particles were created from the polymer gel and passed through a 4750 micron mesh sieve. The sieved particles were frozen by immersion in liquid nitrogen, loaded into a lyophilization tray at a loading of 3 to 7 g/in², and lyophilized. The time to dry (as inferred from time for product to reach within 2 °C of shelf temperature) varied with product loading on the lyophilizer shelf.

The surface area of the dried polymer gel was examined by nitrogen surface analysis using a Micrometrics Surface Area and Porosity Analyzer (model TriStar II). The measured specific surface area using the BET approach was in the range of about 400 to 700 m²/g.

### EXAMPLE 2

### PREPARATION OF PYROLYZED CARBON MATERIAL FROM DRIED POLYMER GEL

Dried polymer gel prepared according to Example 2 was pyrolyzed by passage through a rotary kiln at 850 °C with a nitrogen gas flow of 200 L/h. The weight loss upon pyrolysis was about 52%.

The surface area of the pyrolyzed dried polymer gel was examined by nitrogen surface analysis using a surface area and porosity analyzer. The measured specific surface area using the standard BET approach was in the range of about 600 to 700 m²/g.

### EXAMPLE 3

### PRODUCTION OF ACTIVATED CARBON

Pyrolyzed carbon material prepared according to Example 2 was activated by multiple passes through a rotary kiln at 900 °C under a CO₂ flow rate of 30 L/min, resulting in a total weight loss of about 45%.

The surface area of the activated carbon was examined by nitrogen surface analysis using a surface area and porosity analyzer. The measured specific surface area using the BET approach was in the range of about 1600 to 2000 m²/g.

### EXAMPLE 4

### MICRONIZATION OF ACTIVATED CARBON VIA JET MILLING

Activated carbon prepared according to Example 3 was jet milled using a Jet Pulverizer Micron Master 2 inch diameter jet mill. The conditions comprised about 0.7 lbs of activated carbon per hour, nitrogen gas flow about 20 scf per min and about 100 psi pressure. The average particle size after jet milling was about 8 to 10 microns.

### EXAMPLE 5

### PURITY ANALYSIS OF ACTIVATED CARBON & COMPARISON CARBONS

Activated carbon samples prepared according to Example 4 were examined for their impurity content via proton induced x-ray emission (PIXE). PIXE is an industry-standard, highly sensitive and accurate measurement for simultaneous elemental analysis by excitation of the atoms in a sample to produce characteristic X-rays which are detected and their intensities identified and quantified. PIXE is capable of detection of all elements with atomic numbers ranging from 11 to 92 (*i.e*., from sodium to uranium).

The PIXE impurity (Imp.) data for activated carbons as disclosed herein as well as other activated carbons for comparison purposes is presented in Table 1. Sample 1, 3, 4 and 5 are activated carbons prepared according to Example 3, Sample 2 is a micronized activated carbon prepared according to Example 4, Sample 6 is an activated carbon denoted "MSP-20" obtained from Kansai Coke and Chemicals Co., Ltd. (Kakogawa, Japan), Sample 7 is an activated carbon denoted "YP-50F(YP-17D)" obtained from Kuraray Chemical Co. (Osaka, Japan).

As seen in Table 1, the synthetic activated carbons according to the instant disclosure have a lower PIXE impurity content and lower ash content as compared to other known activated carbon samples.

**Table 1**

| Purity Analysis of Activated Carbon & Comparison Carbons | | | | | | | |
|---|---|---|---|---|---|---|---|
| | | | | | | | |
| Impurity | Impurity Concentration (PPM) | | | | | | |
| | Sample 1 | Sample 2 | Sample 3 | Sample 4 | Sample 5 | Sample 6 | Sample 7 |
| Na | ND* | ND | ND | ND | ND | 353.100 | ND |
| Mg | ND | ND | ND | ND | ND | 139.000 | ND |

| Impurity | Impurity Concentration (PPM) | | | | | | |
|---|---|---|---|---|---|---|---|
| | Sample 1 | Sample 2 | Sample 3 | Sample 4 | Sample 5 | Sample 6 | Sample 7 |
| Al | ND | ND | ND | ND | ND | 63.850 | 38.941 |
| Si | 53.840 | 92.346 | 25.892 | 17.939 | 23.602 | 34.670 | 513.517 |
| P | ND | ND | ND | ND | ND | ND | 59.852 |
| S | ND | ND | ND | ND | ND | 90.110 | 113.504 |
| Cl | ND | ND | ND | ND | ND | 28.230 | 9.126 |
| K | ND | ND | ND | ND | ND | 44.210 | 76.953 |
| Ca | 21.090 | 16.971 | 6.141 | 9.299 | 5.504 | ND | 119.804 |
| Cr | ND | ND | ND | ND | ND | 4.310 | 3.744 |
| Mn | ND | ND | ND | ND | ND | ND | 7.552 |
| Fe | 7.582 | 5.360 | 1.898 | 2.642 | 1.392 | 3.115 | 59.212 |
| Ni | 4.011 | 3.389 | 0.565 | ND | ND | 36.620 | 2.831 |
| Cu | 16.270 | 15.951 | ND | ND | ND | 7.927 | 17.011 |
| Zn | 1.397 | 0.680 | 1.180 | 1.130 | 0.942 | ND | 2.151 |
| Total (% Ash) | 104.190 (0.018) | 134.697 (0.025) | 35.676 (<0.007) | 31.010 (0.006) | 31.44 (0.006) | 805.142 (0.13) | 1024.198 (0.16) |

| | | | | | | | |
|---|---|---|---|---|---|---|---|
| * ND= not detected by PIXE analysis | | | | | | | |

### EXAMPLE 6

### MEASUREMENT OF H, N, O FOR ACTIVATED CARBON

The activated carbon material identified as Sample 1 was analyzed for H, N and O at Elemental Analysis, Inc. (Lexington, KY). The data showed that the hydrogen content was 0.25%, the nitrogen content was 0.21%, and the oxygen content was 0.53%.

### EXAMPLE 7

### IMPREGNATION OF ACTIVATED CARBON WITH LEAD

Saturated solutions of lead acetate, lead nitrate, lead carbonate and lead sulfate in 25:75 acetic acid:water (vol:vol) were prepared. Activated carbon (300 mg, microporous and mesoporous) samples prepared according to Example 4 were suspended in each lead salt solution and shaken overnight at room temperature. The liquid mixture was then centrifuged and the supernatant removed. The carbon pellet was washed three times with deionized water (5 mL) and dried overnight at 45 °C. The lead content of the carbon samples thus prepared was analyzed by PIXE. The results are tabulated in Table 2 below.

**Table 2. Lead Content of Various Activated Carbon Samples**

| **Sample** | **Activated Carbon Type** | **Lead Source** | **Lead Content** |
|---|---|---|---|
| 8 | Microporous | Lead (II) acetate | 7.892% |
| 9 | Mesoporous | Lead (II) acetate | 6.526% |
| 10 | Microporous | Lead (II) nitrate | 0.294% |
| 11 | Mesoporous | Lead (II) nitrate | 2.427% |
| 12 | Microporous | Lead (II) carbonate | 1.855% |
| 13 | Mesoporous | Lead (II) carbonate | 1.169% |
| 14 | Microporous | Lead (II) sulfate | 84.060 ppm |
| 15 | Mesoporous | Lead (II) sulfate | 27.021 ppm |

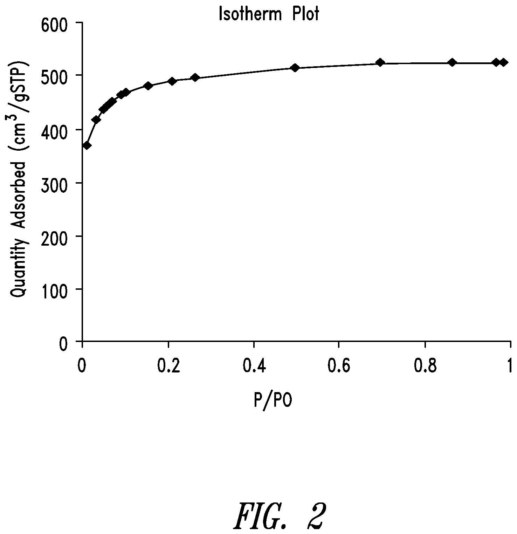

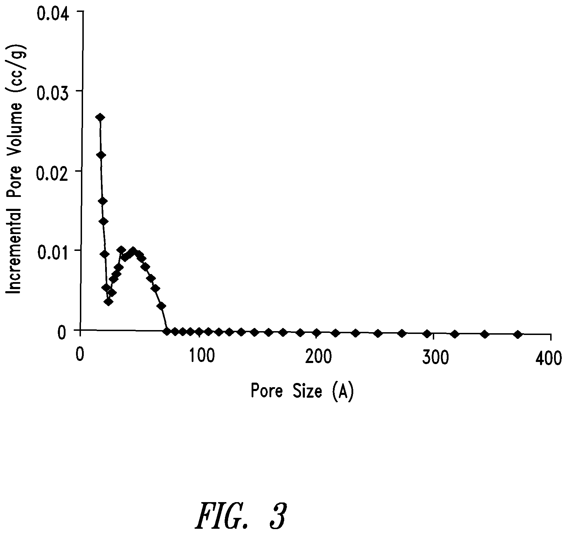

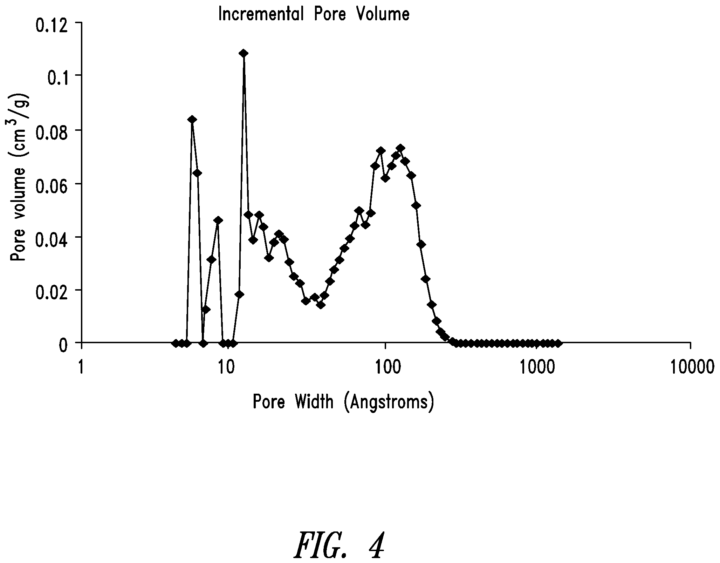

Both microporous and mesoporous activated carbons were studied. An example nitrogen sorption isotherm for microporous carbon is shown in Figure 2. In this case, the total specific BET surface area was 1746 m²/g, and the total pore volume was 0.82 ml/g (cc/g). From these data, the DFT pore distribution was determined as shown in Figure 3. About 50% of the pore volume resides in pores of less than about 25 Å. About 50% of the pore surface area resides in pores of less than 17 Å. An example DFT pore distribution for mesoporous carbon is depicted in Figure 4. In this case, the total specific BET surface area was 2471 m²/g, and the total pore volume was 2.05 ml/g (cc/g). About 50% of the pore volume resides in pores of less than about 54 Å.

As can be seen from the data in Table 2, for highly soluble lead salts (such as lead acetate, lead nitrate and lead carbonate) it was possible to generate carbon materials with substantial levels of lead in the final material, in the range of 0.3 to 8%. In the case of lead sulfate, only ppm levels (<100) were achieved via the impregnation method. Best results were obtained for more highly soluble lead salt forms such as acetate (water solubility = 45.6 parts per 100 parts). In the case of lead nitrate (soluble in water at 56 parts per 100 parts), a relatively high amount of lead was impregnated into the mesoporous carbon, but a much less efficient result was obtained for the microporous carbon.

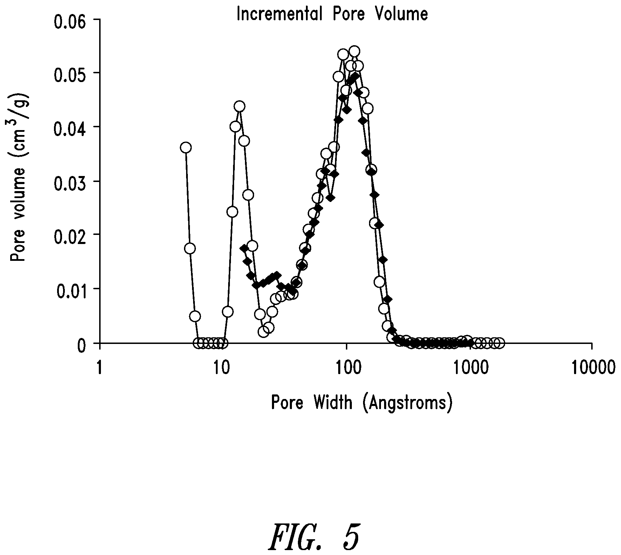

The data in Figure 5 depict the DFT pore volume data for mesoporous activated carbon before (open circles) and after (solid diamonds) impregnation with lead acetate. DFT parameters for this lead-impregnated carbon are given in Table 3. It can be seen that the mesoporous after lead (II) acetate) impregnation had a dramatically reduced micropore volume (and a relatively unchanged mesopore volume). The impregnation of lead into the micropores would be consistent with this observation.

**Table 3. Data for Lead-Impregnated Mesoporous Carbon**

| **Sample** | **Total BET SSA (m²/g)** | **Total pore volume (ml/g [cc/g])** | **DFT pore volume <20 Å (ml/g [cc/g])** | **DFT pore volume >20 Å (ml/g [cc/g])** |
|---|---|---|---|---|
| 16 (Before lead (II) acetate impregnated) | 1751 | 1.48 | 0.50 | 0.78 |
| 17 (After lead (II) acetate impregnated) | 1057 | 1.11 | 0.26 | 0.77 |

### EXAMPLE 8

### IMPREGNATION OF PYROLYZED POLYMER GEL WITH LEAD

Pyrolyzed polymer gel (900 mg) prepared according to Example 2 was suspended in saturated lead acetate prepared according to Example 7. The liquid mixture was then shaken overnight at room temperature. The liquid mixture was then centrifuged and the supernatant removed. The carbon pellet was washed three times with deionized water (5 mL) and dried overnight at 45 °C. The lead content of the carbon samples thus prepared was analyzed by PIXE. As can be seen in Table 4 below, the microporous pyrolyzed carbon provided more efficient impregnation of lead, *i.e*., 13.6%, whereas mesoporous carbon achieved about 1% lead content.

**Table 4. Lead Content of Various Pyrolyzed Polymer Gel Samples**

| **Sample** | **Pyrolyzed Carbon Type** | **Lead Source** | **Lead Content** |
|---|---|---|---|
| 18 | Mesoporous | Lead (II) acetate | 1.012% |
| 19 | Microporous | Lead (II) acetate | 13.631% |

### EXAMPLE 9

### IMPREGNATION OF DRIED POLYMER GEL WITH LEAD

Dried polymer gel (900 mg) prepared according to Example 1 was suspended in saturated lead acetate prepared according to Example 7. The liquid mixture was then shaken overnight at room temperature. The liquid mixture was then centrifuged and the supernatant removed. The polymer gel pellet was washed three times with deionized water (5 mL) and dried overnight at 45 °C. The lead content of the polymer gel thus prepared was analyzed by PIXE.

### EXAMPLE 10

### INCORPORATION OF LEAD DURING POLYMERIZATION OF POLYMER GEL

A resorcinol-formaldehyde gel mixture was prepared. The solids content was 41%, the resorcinol to catalyst ratio was 5:1, the catalyst was ammonium acetate, and the acetic acid content was 30%. About 20 mL of polymer solution was obtained (prior to placing solution at elevated temperature and generating the polymer gel). To this solution, about 5 mL of saturated lead (II) acetate in 25% acetic acid solution was added. The resulting final acetic acid content was thus about 29%, and the resulting final solids content was about 33%. The solution was then stored at 45 °C for about 5 h, followed by 24 h at 85 °C to fully induce the formation of a lead-containing polymer gel. This gel was disrupted to create particles, and the particles were frozen in liquid nitrogen and then dried in a lyophilizer as follows. The liquid-nitrogen frozen material was poured into a tray, and the tray was placed on a lyophilizer shelf pre-chilled to -30 °C. The chamber pressure was then lowered to and maintained at about 150 to 300 mTorr. The shelf temperature was ramped from -30 °C to +50 °C over an hour, and then held at 50 °C for about 8 hours. The dried polymer gel (Sample 20) was found to contain 7.008% lead by PIXE analysis.

Lead-containing activated carbon was then produced as follows. The resulting dried lead-containing polymer gel was pyrolyzed and activated by heating from room temperature to 850 °C under nitrogen gas at a ramp rate of 20 °C per min, followed by a hold for 4 hours at 850 °C under carbon dioxide, followed by cooling under nitrogen from 850 °C to ambient over several hours.

### EXAMPLE 11

### PURITY ANALYSIS OF CARBON MATERIALS AND POLYMER GELS COMPRISING ELECTROCHEMICAL MODIFIERS

The lead impregnated carbon materials (Samples 8-15, 18 and 19) and lead impregnated polymer gel (Sample 20) were analyzed by PIXE to determine the lead and other elemental content. These data are tabulated in Table 5. Elements such as tantalum, chlorine and aluminum were not typically observed in the non-impregnated carbon materials or polymer gels, accordingly their presence in the impregnated samples is attributed to impurities in the lead source. Higher purity carbon materials and polymer gels can be prepared by using purified sources of lead or other electrochemical modifiers.

**Table 5**

| Purity Analysis of Carbon Materials & Polymer Gels Comprising Electrochemical modifiers | | | | | | | | | | | |
|---|---|---|---|---|---|---|---|---|---|---|---|
| | | | | | | | | | | | |

| Element | Element Concentration | | | | | | | | | | |
|---|---|---|---|---|---|---|---|---|---|---|---|
| | S. 8 | S. 9 | S. 10 | S. 11 | S. 12 | S. 13 | S. 14 | S. 15 | S. 18 | S. 19 | S. 20 |
| Pb (%) | 7.892 | 6.526 | 0.294 | 2.427 | 1.855 | 1.169 | 0.0084 | 0.0027 | 1.012 | 13.631 | 7.008 |
| Fe (ppm) | 7 | 8 | 3 | ND | 7 | 3 | 6 | 2 | ND | ND | 6 |
| Cl (ppm) | 312 | 254 | 20 | 103 | 85 | 66 | ND | ND | 41 | ND | ND |
| Si (ppm) | 97 | 94 | 27 | ND | 43 | ND | 29 | ND | ND | ND | ND |
| Ni (ppm) | ND | ND | ND | ND | ND | ND | ND | ND | ND | ND | 5 |
| Ta (ppm) | 64 | 45 | ND | 15 | 18 | 10 | ND | ND | 7 | 107 | 56 |
| Al (ppm) | ND | 72 | ND | ND | 47 | ND | 38 | ND | ND | ND | ND |
| Ca (ppm) | ND | ND | 7 | ND | ND | 10 | 4 | 9 | ND | ND | ND |
| Co (ppm) | ND | ND | ND | ND | ND | ND | 12 | ND | ND | ND | ND |
| S (ppm) | ND | ND | ND | ND | ND | ND | 23 | 23 | ND | ND | ND |
| Cu (ppm) | ND | ND | ND | ND | ND | ND | 2 | 1 | ND | ND | ND |

| | | | | | | | | | | | |
|---|---|---|---|---|---|---|---|---|---|---|---|
| * ND= not detected by PIXE analysis | | | | | | | | | | | |

### EXAMPLE 12

### DEVICE COMPRISING LEAD OXIDE CATHODE AND CARBON-CONTAINING ANODE

An energy storage device is constructed from a lead acid cathode comprised of lead and lead oxide active materials and a carbon and lead containing anode. The anode was prepared by impregnation of activated carbon (prepared according to Example 4) by contacting the activated carbon with lead and lead salts while in the gel stage (prior to drying the polymer hydrogel).

The cathode paste comprising lead and lead oxides is applied to a lead current collector matrix using methods known in the art. The anode paste comprising activated carbon impregnated with lead is applied in a similar manner to a lead current collector matrix. In various embodiments, the ratio of lead to carbon in the anode active material ranges from 0.5:99.5 to 99.5:0.5. In other embodiments, the level of elements such as antimony, arsenic, cobalt, nickel, iron, chromium, and tellurium in the carbon material and the electrode are kept to a minimum because these elements can contribute to hydrogen evolution on the anode during the charge cycle. For example, in some embodiments, chromium, iron, cobalt, nickel, arsenic and copper are each present at levels less than 5 ppm.

The cathodes and anodes of this device are assembled as typical in a lead acid battery and are immersed in a sulfuric acid/distilled water electrolyte. The electrolyte is free to penetrate within the porosity of the lead containing activated carbon anode paste.

As the anode now contains a highly porous carbon and lead matrix, the sulfuric acid electrolyte is free to fully penetrate the entire surface area of the anode. The increased surface area contact between the lead active material and the sulfate ions contained within the electrolyte increase the efficiency of the discharge reaction from spongy lead to lead sulfate. As the ions are in closer proximity to the lead active material, the ion migration distance is decreased to the width of the pore - in some cases less than 2 nm. This reduced ion migration distance increases the rate at which the charge and discharge reactions can occur thus increasing the power performance of the anode. In addition, the discharge and charge reactions will proceed more efficiently within these micro and mesopores given the significantly reduced ion migration distance of the sulfate ion. In addition, the typical anode failure mechanism of wearout and crystal growth of the lead anode active material will be physically restrained given the pore size of the activated carbon material. As the lead sulfate crystals cannot grow larger than the pore in which they are contained, the failure mode associated with negative plate densification will be eliminated.

If highly pure carbon containing lead active material at concentrations of 80-99.5% as described above is present in the anode paste, cycle life will improve by a factor of 2-5 in deep discharge and float charge applications (50% state of charge). Current and energy efficiency will improve also and specific energy may increase 30% over traditional lead acid battery anodes.

### EXAMPLE 13

### DEVICE COMPRISING ANODE AND CATHODE COMPRISING CARBON/LEAD MATERIALS

An energy storage device is constructed from two electrodes which both comprise lead and carbon containing elements. Impregnation of activated carbon is accomplished by contacting the activated carbon with a paste comprising a lead source. In this example, the cathode paste is comprised of activated carbon with lead oxide penetrated into the porosity of the carbon. This paste contains between 80-99.5% of lead oxide by weight.

Carbon is more conductive than lead dioxide and will improve the performance of the electrode by reducing its overall resistance and creating a more uniform current distribution. In addition, the porosity of the carbon will contain the sulfate ions as well as the lead oxide active material, thus reducing the ion migration distance between the sulfate ion and the active material.

If highly pure carbon comprising 80-99.5% of lead oxide by weight as described above is present in the cathode paste, cycle life will improve by a factor of 2-5 in deep discharge and float charge applications (50% state of charge). Current and energy efficiency will improve also.

### EXAMPLE 14

### PREPARATION OF A MESOPOROUS CARBON MATERIAL

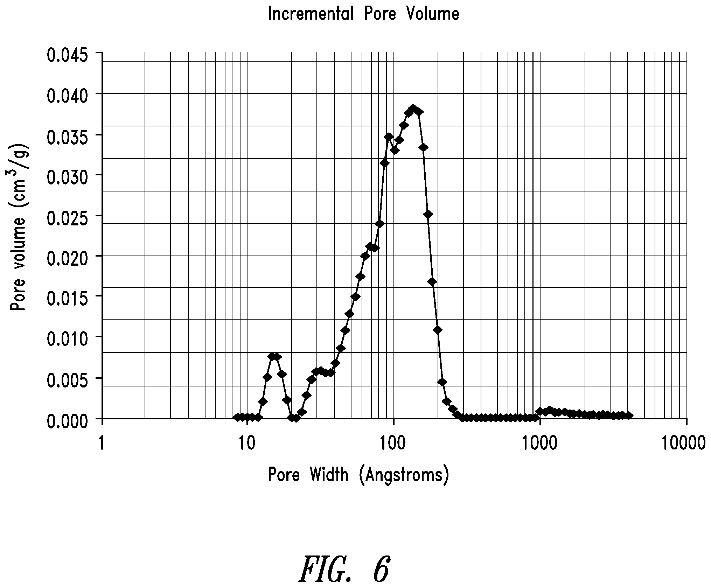

A polymer gel was prepared and pyrolyzed (but not activated) according to Examples 1 and 2. The carbon material was analyzed and determined to comprise a specific surface area of about 675 m²/g, a total pore volume of about 0.70 ml/g (cc/g) and a tap density of about 0.45 g/ml (g/cc). The pore size distribution of the mesoporous carbon material is presented in Figure 6.

Electrochemical modifiers are incorporated in the mesoporous carbon material as described above. For example, electrochemical modifiers are incorporated during the polymerization stage, into the dried (or undried polymer gel) or after pyrolysis of the polymer gel.

The various embodiments described above can be combined to provide further embodiments. Aspects of the embodiments can be modified, if necessary to employ concepts of the various patents, applications and publications to provide yet further embodiments. These and other changes can be made to the embodiments in light of the above-detailed description. In general, in the following claims, the terms used should not be construed to limit the claims to the specific embodiments disclosed in the specification and the claims, but should be construed to include all possible embodiments to which such claims are entitled. Accordingly, the claims are not limited by the disclosure.

## Claims

1. A carbon material comprising at least 1,000 ppm of an electrochemical modifier, wherein the electrochemical modifier comprises lead or zinc or combinations thereof, and wherein the carbon material comprises greater than 50% of its total pore volume in pores having a diameter less than 2 nm and a total of less than 500 ppm, preferably less than 200 ppm, of all other elements having atomic numbers ranging from 11 to 92, as measured by proton induced x-ray emission.

2. The carbon material of claim 1, wherein the electrochemical modifier is in elemental form or is in an oxidized form, preferably in the formof a metal oxide.

3. The carbon material of claim 1 or 2, wherein the carbon material comprises at least 0.5% (wt/wt), preferably at least 50% (wt/wt), and more preferred at least 90% (wt/wt) of the electrochemical modifier.

4. The carbon material of claim 1-3, wherein the electrochemical modifier comprises lead, preferably in the form of elemental lead, lead (II) oxide, lead (IV) oxide, lead sulfate or combinations thereof, or in the form of lead acetate, lead carbonate, lead sulfate, lead orthoarsenate, lead pyroarsenate, lead bromide, lead caprate, lead carproate, lead caprylate, lead chlorate, lead chloride, lead fluoride, lead nitrate, lead oxychloride, lead orthophosphate sulfate, lead sulfide, lead tungstate or combinations thereof.

5. The carbon material of claim 4, wherein the electrochemical modifier comprises lead in the form of lead acetate or lead sulfate or combinations thereof.

6. The carbon material of claim 1-5, wherein the ash content of the carbon material, excluding the ash associated with the electrochemical modifier, is less than 0.03% as calculated from proton induced x-ray emission data.

7. The carbon material of claim 1-6, wherein the carbon material comprises less than 5 ppm of at least one selected from the group consisting of iron, nickel, cobalt, titanium, chromium, and copper, as measured by proton induced x-ray emission.

8. The carbon material of claim 1-7, wherein the carbon material comprises less than 100 ppm sodium, less than 300 ppm silicon, less than 100 ppm potassium, less than 100 ppm calcium, less than 20 ppm iron, less than 10 ppm nickel, less than 140 ppm copper, less than 50 ppm aluminum and less than 5 ppm chromium as measured by proton induced x-ray emission, preferably the carbon material comprises less than 50 ppm sodium, less than 50 ppm silicon, less than 30 ppm potassium, less than 10 ppm calcium, less than 2 ppm iron, less than 1 ppm nickel, less than 1 ppm copper, less than 10 ppm aluminum and less than 1 ppm chromium as measured by proton induced x-ray emission.

9. The carbon material of claim 1-8, wherein the carbon material comprises a pyrolyzed polymer cryogel.

10. The carbon material of claim 1-9, wherein the carbon material comprises an activated polymer cryogel.

11. The carbon material of claim 1-10, wherein the carbon material comprises a BET specific surface area of at least 500 m²/g, preferably at least 1000 m²/g, more preferred at least 1500 m²/g, and even more preferred at least 2000 m²/g.

12. The carbon material of claim 1-11, wherein the carbon material comprises a total pore volume of at least 2.0 ml/g (cc/g), preferably at least 1.0 ml/g (cc/g).

13. The carbon material of claim 1-12, wherein the carbon material comprises a pore volume of at least 0.25 ml/g (cc/g), preferably at least 0.75 ml/g (cc/g), and more preferred at least 1.50 ml/g (cc/g) for pores less than 20 angstroms.

14. An electrical energy storage device comprising a carbon material comprising at least 1,000 ppm of an electrochemical modifier, wherein the electrochemical modifier comprises lead or zinc or combinations thereof, and wherein the carbon material comprises greater than 50% of its total pore volume in pores having a diameter less than 2 nm and a total of less than 500 ppm of all other elements having atomic numbers ranging from 11 to 92, as measured by proton induced x-ray emission.

15. The device of claim 14, wherein the device is a battery comprising:
a) at least one positive electrode comprising a first active material m electrical contact with a first current collector;
b) at least one negative electrode comprising a second active material m electrical contact with a second current collector; and
c) an electrolyte, preferably comprising sulfuric acid and water;
wherein the positive electrode and the negative electrode are separated by an inert porous separator, and wherein at least one of the first or second active materials comprises the carbon material, preferably both the first and second active materials comprise the carbon material.

16. An electrode comprising a binder and a carbon material comprising at least 1,000 ppm of an electrochemical modifier, wherein the electrochemical modifier comprises lead or zinc or combinations thereof, and wherein the carbon material comprises greater than 50% of its total pore volume in pores having a diameter less than 2 nm and a total of less than 500 ppm of all other elements having atomic numbers ranging from 11 to 92, as measured by proton induced x-ray emission.

17. The device of claim 14 or 15, or the electrode of claim 16, wherein the electrochemical modifier is lead, preferably in the form of elemental lead, lead (II) oxide, lead (IV) oxide or combinations thereof, more preferred in the form of lead acetate, lead carbonate, lead sulfate, lead orthoarsenate, lead pyroarsenate, lead bromide, lead caprate, lead carproate, lead caprylate, lead chlorate, lead chloride, lead fluoride, lead nitrate, lead oxychloride, lead orthophosphate sulfate, lead sulfide, lead tungstate or combinations thereof.

## Patentansprüche

1. Kohlenstoffmaterial, umfassend mindestens 1000 ppm eines elektrochemischen Modifikators, wobei der elektrochemische Modifikator Blei oder Zink oder Kombinationen davon umfasst und wobei das Kohlenstoffmaterial mehr als 50 % seines Gesamtporenvolumens an Poren mit einem Durchmesser von weniger als 2 nm und insgesamt weniger als 500 ppm, vorzugsweise weniger als 200 ppm, an allen anderen Elementen mit Ordnungszahlen im Bereich von 11 bis 92 gemäß Messung durch protoneninduzierte Röntgenemission umfasst.

2. Kohlenstoffmaterial nach Anspruch 1, wobei der elektrochemische Modifikator in elementarer Form oder in oxidierte Form, vorzugsweise in Form eines Metalloxids, vorliegt.

3. Kohlenstoffmaterial nach Anspruch 1 oder 2, wobei das Kohlenstoffmaterial mindestens 0,5 % (Gew./Gew.-%), vorzugsweise mindestens 50 % (Gew./Gew.-%) und weiter bevorzugt mindestens 90 %(Gew./Gew.-%) des elektrochemischen Modifikators umfasst.

4. Kohlenstoffmaterial nach Anspruch 1-3, wobei der elektrochemische Modifikator Blei umfasst, vorzugsweise in Form von elementarem Blei, Blei(II)-oxid, Blei(IV)-oxid, Bleisulfat oder Kombinationen davon oder in Form von Bleiacetat, Bleicarbonat, Bleisulfat, Bleiorthoarsenat, Bleipyroarsenat, Bleibromid, Bleicaprat, Bleicaproat, Bleicaprylat, Bleichlorat, Bleichlorid, Bleifluorid, Bleinitrat, Bleioxidchlorid, Bleiorthophosphatsulfat, Bleisulfid, Bleiwolframat oder Kombinationen davon.

5. Kohlenstoffmaterial nach Anspruch 4, wobei der elektrochemische Modifikator Blei in Form von Bleiacetat oder Bleisulfat oder Kombinationen davon umfasst.

6. Kohlenstoffmaterial nach Anspruch 1-5, wobei der Aschegehalt des Kohlenstoffmaterials ausschließlich der mit dem elektrochemischen Modifikator assoziierten Asche weniger als 0,03 % gemäß Berechnung aus Daten der protoneninduzierten Röntgenemission beträgt.

7. Kohlenstoffmaterial nach Anspruch 1-6, wobei das Kohlenstoffmaterial weniger als 5 ppm mindestens eines Elements aus der Gruppe bestehend aus Eisen, Nickel, Cobalt, Titan, Chrom und Kupfer gemäß Messung durch protoneninduzierte Röntgenemission umfasst.

8. Kohlenstoffmaterial nach Anspruch 1-7, wobei das Kohlenstoffmaterial weniger als 100 ppm Natrium, weniger als 300 ppm Silicium, weniger als 100 ppm Kalium, weniger als 100 ppm Kalzium, weniger als 20 ppm Eisen, weniger als 10 ppm Nickel, weniger als 140 ppm Kupfer, weniger als 50 ppm Aluminium und weniger als 5 ppm Chrom gemäß Messung durch protoneninduzierte Röntgenemission umfasst, vorzugsweise das Kohlenstoffmaterial weniger als 50 ppm Natrium, weniger als 50 ppm Silicium, weniger als 30 ppm Kalium, weniger als 10 ppm Kalzium, weniger als 2 ppm Eisen, weniger als 1 ppm Nickel, weniger als 1 ppm Kupfer, weniger als 10 ppm Aluminium und weniger als 1 ppm Chrom gemäß Messung durch protoneninduzierte Röntgenemission umfasst.

9. Kohlenstoffmaterial nach Anspruch 1-8, wobei das Kohlenstoffmaterial ein pyrolysiertes Polymerkryogel umfasst.

10. Kohlenstoffmaterial nach Anspruch 1-9, wobei das Kohlenstoffmaterial ein aktiviertes Polymerkryogel umfasst.

11. Kohlenstoffmaterial nach Anspruch 1-10, wobei das Kohlenstoffmaterial eine spezifische BET-Oberfläche von mindestens 500 m²/g, vorzugsweise mindestens 1000 m²/g, weiter bevorzugt mindestens 1500 m²/g und noch weiter bevorzugt mindestens 2000 m²/g umfasst.

12. Kohlenstoffmaterial nach Anspruch 1-11, wobei das Kohlenstoffmaterial ein Gesamtporenvolumen von mindestens 2,0 ml/g (cm³/g), vorzugsweise mindestens 1,0 ml/g (cm³/g), aufweist.

13. Kohlenstoffmaterial nach Anspruch 1-12, wobei das Kohlenstoffmaterial ein Porenvolumen von mindestens 0,25 ml/g (cm³/g), vorzugsweise mindestens 0,75 ml/g (cm³/g) und weiter bevorzugt mindestens 1,50 ml/g (cm³/g) für Poren von weniger als 20 Ängström aufweist.

14. Vorrichtung zur Speicherung von elektrischer Energie, umfassend ein Kohlenstoffmaterial, das mindestens 1000 ppm eines elektrochemischen Modifikators umfasst, wobei der elektrochemische Modifikator Blei oder Zink oder Kombinationen davon umfasst und wobei das Kohlenstoffmaterial mehr als 50 % seines Gesamtporenvolumens an Poren mit einem Durchmesser von weniger als 2 nm und insgesamt weniger als 500 ppm an allen anderen Elementen mit Ordnungszahlen im Bereich von 11 bis 92 gemäß Messung durch protoneninduzierte Röntgenemission umfasst.

15. Vorrichtung nach Anspruch 14, wobei es sich bei der Vorrichtung um eine Batterie handelt, die
a) mindestens eine positive Elektrode, die ein erstes Aktivmaterial umfasst, das in elektrischem Kontakt mit einem ersten Stromsammler steht;
b) mindestens eine negative Elektrode, die ein zweites Aktivmaterial umfasst, das in elektrischem Kontakt mit einem zweiten Stromsammler steht, und
c) einen Elektrolyt, der vorzugsweise Schwefelsäure und Wasser umfasst;
umfasst; wobei die positive Elektrode und die negative Elektrode durch einen inerten porösen Separator getrennt sind und wobei das erste Aktivmaterial und/oder das zweite Aktivmaterial das Kohlenstoffmaterial umfassen bzw. umfasst und vorzugsweise sowohl das erste Aktivmaterial als auch das zweite Aktivmaterial das Kohlenstoffmaterial umfassen.

16. Elektrode, umfassend ein Bindemittel und ein Kohlenstoffmaterial, das mindestens 1000 ppm eines elektrochemischen Modifikators umfasst, wobei der elektrochemische Modifikator Blei oder Zink oder Kombinationen davon umfasst und wobei das Kohlenstoffmaterial mehr als 50 % seines Gesamtporenvolumens an Poren mit einem Durchmesser von weniger als 2 nm und insgesamt weniger als 500 ppm an allen anderen Elementen mit Ordnungszahlen im Bereich von 11 bis 92 gemäß Messung durch protoneninduzierte Röntgenemission umfasst.

17. Vorrichtung nach Anspruch 14 oder 15 oder Elektrode nach Anspruch 16, wobei es sich bei dem elektrochemischen Modifikator um Blei handelt, vorzugsweise in Form von elementarem Blei, Blei(II)-oxid, Blei(IV)-oxid, Bleisulfat oder Kombinationen davon, weiter bevorzugt in Form von Bleiacetat, Bleicarbonat, Bleisulfat, Bleiorthoarsenat, Bleipyroarsenat, Bleibromid, Bleicaprat, Bleicaproat, Bleicaprylat, Bleichlorat, Bleichlorid, Bleifluorid, Bleinitrat, Bleioxidchlorid, Bleiorthophosphatsulfat, Bleisulfid, Bleiwolframat oder Kombinationen davon.

## Revendications

1. Matériau carboné comprenant au moins 1 000 ppm d'un modificateur électrochimique, le modificateur électrochimique comprenant du plomb ou du zinc ou des combinaisons correspondantes, et le matériau carboné comprenant plus de 50 % de son volume total de pore dans des pores possédant un diamètre inférieur à 2 nm et un total de moins de 500 ppm, préférablement moins de 200 ppm, de tous les autres éléments possédant des numéros atomiques dans la plage de 11 à 92, tel que mesuré par émission de rayons X induite par les protons.

2. Matériau carboné selon la revendication 1, le modificateur électrochimique se trouvant sous forme élémentaire ou étant sous forme oxydée, préférablement sous forme d'un oxyde métallique.

3. Matériau carboné selon la revendication 1 ou 2, le matériau carboné comprenant au moins 0,5 % (poids/poids), préférablement au moins 50 % (poids/poids), et de manière plus préférée au moins 90 % (poids/poids) du modificateur électrochimique.

4. Matériau carboné selon les revendications 1 à 3, le modificateur électrochimique comprenant du plomb, préférablement sous forme de plomb élémentaire, d'oxyde de plomb(II), d'oxyde de plomb(IV), de sulfate de plomb ou de combinaisons correspondantes, ou sous forme d'acétate de plomb, de carbonate de plomb, de sulfate de plomb, d'orthoarséniate de plomb, de pyroarséniate de plomb, de bromure de plomb, de caprate de plomb, de caproate de plomb, de caprylate de plomb, de chlorate de plomb, de chlorure de plomb, de fluorure de plomb, de nitrate de plomb, d'oxychlorure de plomb, de sulfate orthophosphate de plomb, de sulfure de plomb, de tungstate de plomb ou de combinaisons correspondantes.

5. Matériau carboné selon la revendication 4, le modificateur électrochimique comprenant du plomb sous forme d'acétate de plomb ou de sulfate de plomb ou de combinaisons correspondantes.

6. Matériau carboné selon les revendications 1 à 5, la teneur en cendres du matériau carboné, à l'exclusion des cendres associées au modificateur électrochimique, étant inférieure à 0,03 % telle que calculée à partir de données d'émission de rayons X induite par les protons.

7. Matériau carboné selon les revendications 1 à 6, le matériau carboné comprenant moins de 5 ppm d'au moins l'un choisi dans le groupe constitué par le fer, le nickel, le cobalt, le titane, le chrome, et le cuivre, tel que mesuré par émission de rayons X induite par les protons.

8. Matériau carboné selon les revendications 1 à 7, le matériau carboné comprenant moins de 100 ppm de sodium, moins de 300 ppm de silicium, moins de 100 ppm de potassium, moins de 100 ppm de calcium, moins de 20 ppm de fer, moins de 10 ppm de nickel, moins de 140 ppm de cuivre, moins de 50 ppm d'aluminium et moins de 5 ppm de chrome tel que mesuré par émission de rayons X induite par les protons, préférablement le matériau carboné comprenant moins de 50 ppm de sodium, moins de 50 ppm de silicium, moins de 30 ppm de potassium, moins de 10 ppm de calcium, moins de 2 ppm de fer, moins de 1 ppm de nickel, moins de 1 ppm de cuivre, moins de 10 ppm d'aluminium et moins de 1 ppm de chrome tel que mesuré par émission de rayons X induite par les protons.

9. Matériau carboné selon les revendications 1 à 8, le matériau carboné comprenant un cryogel de polymère pyrolysé.

10. Matériau carboné selon les revendications 1 à 9, le matériau carboné comprenant un cryogel de polymère activé.

11. Matériau carboné selon les revendications 1 à 10, le matériau carboné comprenant une aire de surface spécifique BET d'au moins 500 m²/g, préférablement au moins 1 000 m²/g, de manière plus préférée au moins 1 500 m²/g, et de manière encore plus préférée au moins 2 000 m²/g.

12. Matériau carboné selon les revendications 1 à 11, le matériau carboné comprenant un volume total de pore d'au moins 2,0 ml/g (cm³/g), préférablement au moins 1,0 ml/g (cm³/g) .

13. Matériau carboné selon les revendications 1 à 12, le matériau carboné comprenant un volume de pore d'au moins 0,25 ml/g (cm³/g), préférablement au moins 0,75 ml/g (cm³/g), et de manière plus préférée au moins 1,50 ml/g (cm³/g) pour des pores inférieurs à 20 angströms.

14. Dispositif de stockage d'énergie électrique comprenant un matériau carboné comprenant au moins 1 000 ppm d'un modificateur électrochimique, le modificateur électrochimique comprenant du plomb ou du zinc ou des combinaisons correspondantes, et le matériau carboné comprenant plus de 50 % de son volume total de pore dans des pores possédant un diamètre inférieur à 2 nm et un total de moins de 500 ppm de tous les autres éléments possédant des numéros atomiques dans la plage de 11 à 92, tel que mesuré par émission de rayons X induite par les protons.

15. Dispositif selon la revendication 14, le dispositif étant une batterie comprenant :
a) au moins une électrode positive comprenant un premier matériau actif en contact électrique avec un premier collecteur de courant ;
b) au moins une électrode négative comprenant un deuxième matériau actif en contact électrique avec un deuxième collecteur de courant ; et
c) un électrolyte, préférablement comprenant de l'acide sulfurique et de l'eau ;
l'électrode positive et l'électrode négative étant séparées par un séparateur poreux inerte, et au moins l'un parmi les premier et deuxième matériaux actifs comprenant le matériau carboné, préférablement à la fois les premier et deuxième matériaux actifs comprenant le matériau carboné.

16. Électrode comprenant un liant et un matériau carboné comprenant au moins 1 000 ppm d'un modificateur électrochimique, le modificateur électrochimique comprenant du plomb ou du zinc ou des combinaisons correspondantes, et le matériau carboné comprenant plus de 50 % de son volume total de pore dans des pores possédant un diamètre inférieur à 2 nm et un total de moins de 500 ppm de tous les autres éléments possédant des numéros atomiques dans la plage de 11 à 92, tel que mesuré par émission de rayons X induite par les protons.

17. Dispositif selon la revendication 14 ou 15, ou électrode selon la revendication 16, le modificateur électrochimique étant du plomb, préférablement sous forme de plomb élémentaire, d'oxyde de plomb(II), d'oxyde de plomb(IV) ou de combinaisons correspondantes, de manière plus préférée sous forme d'acétate de plomb, de carbonate de plomb, de sulfate de plomb, d'orthoarséniate de plomb, de pyroarséniate de plomb, de bromure de plomb, de caprate de plomb, de caproate de plomb, de caprylate de plomb, de chlorate de plomb, de chlorure de plomb, de fluorure de plomb, de nitrate de plomb, d'oxychlorure de plomb, de sulfate orthophosphate de plomb, de sulfure de plomb, de tungstate de plomb ou de combinaisons correspondantes.
